# EUROPEAN PATENT APPLICATION

(11) **EP 2 253 590 A1**
(43) Date of publication of application: **24.11.2010**
(21) Application number: 09713683.2
(22) Date of filing: 25.02.2009
(51) Int. Cl.: C01F 5/28

(54) **ORGANOSOL CONTAINING MAGNESIUM FLUORIDE HYDROXIDE, AND MANUFACTURING METHOD THEREFOR**

(30) Priority: 25.02.2008 JP 2008042974; 04.08.2008 JP 2008201313; 04.08.2008 JP 2008201314; 04.08.2008 JP 2008201319; 04.08.2008 JP 2008201320; 04.08.2008 JP 2008201321; 04.08.2008 JP 2008201322; 04.08.2008 JP 2008201324
(71) Applicant: Central Glass Company, Limited, Yamaguchi 755-0001 (JP)
(72) Inventor: SUGIMOTO, Toshiaki, Kawagoe-shi, Saitama 350-1151 (JP); SAKAMOTO, Tamon, Kawagoe-shi, Saitama 350-1151 (JP); TAKANOBU, Naofumi, Kawagoe-shi, Saitama 350-1151 (JP)
(74) Representative: Manitz, Finsterwald & Partner GbR
(86) International application number: PCT/JP2009/053415
(87) International publication number: WO 2009/107665

(57) **Abstract**

An object of the present invention is to provide an organosol for forming a coating that can remain hydrophilic for a long time even in a situation with no exposure to light, and a manufacturing method thereof. As a means for solving this problem, the organosol is created by dispersing magnesium fluoride compound obtained by reacting at least a magnesium compound (the main raw material) with a solution containing hydrogen fluoride, in an organic solvent. The organosol is **characterized by** containing fine particles of the magnesium fluoride compound which particles have an average particle diameter of from 5 to 500 nm.

## Description

### TECHNICAL FIELD

The present invention relates to a magnesium-containing organosol used for imparting hydrophilicity to a surface of an article, and more particularly to an organic solvent containing magnesium fluoride ultrafine particles having a hydroxyl group, to a manufacturing method therefore, and to a hydrophilic substrate using the organosol. The organosol may be a complex fluoride formed by further containing other metal or may be contain oxide of other metal, and additionally may be a complex organosol containing a filler for improving hydrophilicity.

### BACKGROUND OF THE INVENTION

A water film formed on a surface of a substrate when the surface is hydrophilic prevents diffuse reflection due to droplets, thereby preventing fogging of the surface. Additionally, the water film formed on the surface sometimes exhibits a self-cleansing action with which soils rise to the surface to be removed. With such a property, a hydrophilic thin film can be used in a wide field including automotive sideview mirrors, mirrors located in roads, exterior construction materials for buildings or houses, interior articles such as tiles and blind, and the like.

In order to impart hydrophilicity to the surface of the substrate made of glass, metal or plastic, it is commonly performed to apply a substance having a hydrophilic group to a thin film or to mix such a substance into the substrate. In a case of plastic, an extremely excellent hydrophilicity can be obtained by applying a nonion-based surfactant to the surface of the plastic; however, the surfactant is consumed for a short period of time, and accordingly the hydrophilicity is lost together with the surfactant. Meanwhile, a hydrophilic film having a good durability may be formed by applying a curable monomer having a hydrophilic group such as hydroxyl group and carboxyl group and then by curing it with light or a catalyst; however, a degree of hydrophilicity and durability are not necessarily enough. Furthermore, in a case of unevenly distributing the surfactant at the surface of the plastic by kneading the surfactant into the plastic, a coating film may be lost or coated with soils thereby hardly lasting its effects.

In a case of glass or metal, the hydrophilic film may be formed by application and calcination of water glass or by application and hydrolization of alkoxide.

Of these, a thin film made of titanium oxide obtained from titanium alkoxide is known to be provided with hydrophilicity at the surface on which ultraviolet rays act (Patent Document 1). However, such an effect is expected only in an outdoor application or an indoor application associated with lighting.

On the other hand, a study of a magnesium-containing organosol solution is made for the purpose of producing an optical thin film therefrom. An example of an organosol preferable for forming a magnesium fluoride ultrafine particles-containing thin film is disclosed in Patent Document 2, in which the organosol is obtained in such a manner as to pulverize a gel produced by mixing a hydrogen fluride-containing organic solvent to a solution formed by dissolving magnesium halide in an organic solvent.

Meanwhile, Patent Document 3 discloses a method for synthesizing a magnesium fluoride fine particles sol in an aqueous solution, in which magnesium fluoride including crystalline water has a refractive index lower than that of anhydrous magnesium fluoride and therefore used preferably for a antireflection material. Production of the magnesium fluoride requires intricate operations such as making a reaction in the aqueous solution and removing a by-product salt through ultrafiltration.

In a method discussed in Patent Document 4, a by-product is removed by conducting heat and pressure treatments after reaction on magnesium fluoride produced in an organic solvent. For example, a by-product organic substance (acetic acid) is reacted with a solvent (methanol) and then removed in the form of a compound having a low boiling point (methyl acetate), thereby purifying the magnesium fluoride to reduce refractive index.

Regarding alkaline earth metals other than magnesium, there is proposed an attempt to obtain a dispersion liquid of fluoride fine particles of alkaline earth metals (Patent Document 5), in which the alkaline earth metals are reacted with a fluorination reagent in water or in a mixture solution of water and an organic solvent having a low boiling point and thereafter charged into carboxylic anhydride to be subjected to dehydration and solvent substitution; however, that is not yet demonstrated.

Additionally, an application of magnesium fluoride to an optical substrate is suggested in Patent Document 6. When magnesium fluoride which functions as a hydrophobic layer having a low refractive index is applied to an outermost surface layer of the optical substrate, water stain comes to be hardly induced. Meanwhile, Patent Document 7 discloses a method for introducing hydrophilicity in such a manner as to reform a surface of a coating layer of an optical substrate (which coating layer is formed by coating a surface of the optical substrate with magnesium fluoride) through plasma radiation. However, neither of the methods provides a longtime durability.

None of the above prior arts suggest that the thus produced fluorine-based magnesium compound has a good hydrophilicity. Additionally, None of them report that magnesium fluoride hydroxide is hydrophilic and that a material which has not only hydrophilicity but also low refractive index.

Patent Document 1: International Publication No. WO96/29375
Patent Document 2: Japanese Patent Provisional Publication No. 5-208811
Patent Document 3: Japanese Patent Provisional Publication No. 7-69621
Patent Document 4: International Publication No. WO2002/18982
Patent Document 5: Japanese Patent Provisional Publication No. 2007-161509
Patent Document 6: Japanese Patent Provisional Publication No. 2005-165014
Patent Document 7: Japanese Patent Provisional Publication No. 2001-147302

### SUMMARY OF THE INVENTION

Needs for a substrate provided with hydrophilicity have often arisen. A method for imparting hydrophilicity to a functional material (titanium oxide), which is discussed in Patent Document 1 and requires irradiation of ultraviolet rays, however, expects such an action only in an outdoor application or an indoor application associated with lighting, so that the functional material is limited in its arena.

Hence, there have been desired an organosol solution for forming a film that can remain hydrophilic for a long time even in a situation with no exposure to light, and a substrate excellent in hydrophilicity. Additionally, in optical applications, a specific hydrophilic substrate having hydrophilicity and a low refractive index as discussed in Patent Document 7 has been desired.

An object of the present invention is to provide an organosol, a manufacturing method thereof, and a hydrophilic material produced by using the organosol.

As a result of eagerly making studies in view of the above-mentioned object, the present inventors have found that: an organosol containing magnesium fluoride hydroxide ultrafine particles is produced by reacting magnesium compound serving as a raw material with a hydrofluoric acid-containing solution in an organic solvent under particular conditions; and the organosol is applied to a substrate such as a glass plate and a copper plate and then dried and calcined so as to impart hydrophilicity to the surface. Thus, the present inventors have reached the present invention.

In addition to this, the present inventors have found that the hydrophilicity can be imparted also with an organosol obtained by mixing the hydrofluoric acid-containing solution with a dispersion liquid. In producing the dispersion liquid, a mixture of magnesium compound and one other metal compound is dispersed in the organic solvent, thereby serving as the dispersion liquid.

Likewise, the present inventors have found that the hydrophilicity can be imparted also with an organosol obtained by mixing the hydrofluoric acid-containing solution with a dispersion liquid or a suspension liquid formed by dispersing or suspending a mixture of magnesium compound and some other metal compound in the organic solvent.

Furthermore, the present inventors have found that the hydrophilicity can be imparted also with an organosol obtained by mixing a specific filler such as phyllosilicate into the above-mentioned organosol for the purpose of improving the hydrophilicity.

Moreover, the present inventors have found that the hydrophilic substrate can be produced in different forms depending on the method of applying the organosol to the substrate.

A member formed by coating metal such as copper and aluminum is useful as a heat exchange element. Meanwhile, a member formed by coating a glass in an optical application is useful as a member having both hydrophilicity and low refractivity.

Hence, the present invention includes the following inventions 1 to 38.

### [Invention 1]

An organosol comprising: an organic solvent; and a magnesium fluoride compound dispersed in the organic solvent, the magnesium fluoride compound being obtained by reacting at least a magnesium compound with a hydrofluoric acid-containing solution in the organic solvent, **characterized in that** the magnesium fluoride compound contained in the organosol is ultrafine particles having an average particle diameter of from 5 to 500 nm.

### [Invention 2]

An organosol as discussed in Invention 1, **characterized in that** the magnesium fluoride compound is at least magnesium fluoride hydroxide having a hydroxyl group.

### [Invention 3]

An organosol as discussed in Invention 1 or 2, **characterized in that** the magnesium compound is used as a main raw material while one other metal compound is used as an auxiliary raw material.

### [Invention 4]

An organosol as discussed in Invention 3, **characterized in that** the other metal compound includes at least one metal selected from the group consisting of calcium, barium, strontium, lithium, sodium, potassium, rubidium, cesium, aluminum, gallium, indium, silicon, germanium, tin, lead, antimony, bismuth, copper, silver, gold, zinc, scandium, yttrium, titanium, zirconium, hafnium, niobium, tantalum, chromium, molybdenum, tungsten, manganese, iron, cobalt, nickel, ruthenium, rhodium, palladium, osmium, iridium, and platinum.

### [Invention 5]

An organosol as discussed in Invention 3 or 4, **characterized in that** the other metal compound includes at least one metal selected from the group consisting of calcium, barium, lithium, sodium, aluminum and iron.

### [Invention 6]

An organosol as discussed in Invention 4 or 5, **characterized in that** the other metal compound is at least one selected from the group consisting of oxide, hydroxide, hydroxide sol, nitrate, chloride, acetate, carbonate, borate, oxalate, citrate, phosphates, octylate, organic metal complex and alkoxide, of the metal.

### [Invention 7]

An organosol as discussed in Invention 3, **characterized in that** the other metal compound is ultrafine particles of an oxide of a metal.

### [Invention 8]

An organosol as discussed in Invention 7, **characterized in that** the metal is at least one metal selected from the group consisting of silicon, aluminum, cerium, zirconium and titanium.

### [Invention 9]

An organosol as discussed in any of Inventions 1 to 8, characterized by further comprising a filler as an additive.

### [Invention 10]

An organosol as discussed in Invention 9, **characterized in that** the filler is at least one selected from the group consisting of phyllosilicate mineral, calcined shell calcium, zeolite, silica gel, anthracite, activated carbon, fiber, a carbon compound, and a hydrophilic mucopolysaccharide.

### [Invention 11]

An organosol as discussed in Invention 10, **characterized in that** the phyllosilicate mineral is at least one kind selected from the group consisting of prehnite, apophyllite, talc, pyrophyllite, mica, vermiculite, chlorite, montmorillonite, kaolinite, dickite, serpentine and sepiolite.

### [Invention 12]

A method for manufacturing the organosol as discussed in any of Inventions 1 to 11, comprising the following steps (a), (b) and (c): (a) a step of adding a hydrofluoric acid-containing solution dropwise to a solution obtained by dispersing, suspending or dissolving at least a magnesium compound in an organic solvent, under a condition of reducing a reaction rate, thereby producing magnesium fluoride hydroxide ultrafine particles bit by bit; (b) a step of eliminating a by-product or an excessive amount of hydrogen fluoride; and (c) a step of conducting a solvent substitution or a solvent concentration adjustment on a magnesium fluoride hydroxide sol formed by the step (b) thereby producing the organosol.

### [Invention 13]

A manufacturing method as discussed in Invention 12, **characterized in that** the other metal compound or the filler is added as the auxiliary raw material in the step (a).

### [Invention 14]

A manufacturing method as discussed in Invention 12, characterized by adding a step (d) behind the step (c), the step (d) being of pulverizing an aggregate of the magnesium fluoride hydroxide.

### [Invention 15]

A hydrophilic substrate comprising: a substrate; and a coating layer formed on the substrate, **characterized in that** ultrafine particles are dispersed at least at a surface of the coating layer and that the ultrafine particles contains at least magnesium fluoride hydroxide.

### [Invention 16]

A hydrophilic substrate as discussed in Invention 15, **characterized in that** the ultrafine particles have an average particle diameter of from 5 to 500 nm.

### [Invention 17]

A hydrophilic substrate as discussed in Invention 15 or 16, **characterized in that** other ultrafine particles different from the ultrafine particles of the magnesium fluoride hydroxide are mixed to exist at least at the surface of the coating layer.

### [Invention 18]

A hydrophilic substrate as discussed in Invention 17, **characterized in that** the other ultrafine particles have an average particle diameter of from 5 to 500 nm.

### [Invention 19]

A hydrophilic substrate as discussed in Invention 15, **characterized in that** the ultrafine particles dispersed at least at the surface of the coating layer are ultrafine particles formed by treating the substrate with the organosol as discussed in any of Inventions 1 to 11.

### [Invention 20]

A hydrophilic substrate as discussed in any of Inventions 15 to 19, **characterized in that** the coating layer contains a binder and that the binder bonds the ultrafine particles to the substrate.

### [Invention 21]

A hydrophilic substrate as discussed in any of Inventions 15 to 20, **characterized in that** the coating layer has at its surface a contact angle of water of not more than 20°.

### [Invention 22]

A hydrophilic substrate as discussed in any of Inventions 15 to 21, **characterized in that** a surface layer in which the ultrafine particles of the magnesium fluoride hydroxide are dispersed is occupied with 30 % by volume of the ultrafine particles.

### [Invention 23]

A hydrophilic substrate as discussed in any of Inventions 15 to 22, **characterized in that** the ultrafine particles exist all over the coating layer at a charging ratio of from 40 to 90 vol. % in total.

### [Invention 24]

A hydrophilic substrate as discussed in any of Inventions 15 to 23, **characterized in that** the substrate is one selected from the group consisting of porous substrates, inorganic glass substrates, plastic glass substrates, metal substrates and ceramic substrates.

### [Invention 25]

A heat exchange element comprising: a substrate; and a hydrophilic film formed on the substrate, **characterized in that** the hydrophilic film comprises ultrafine particles and that the ultrafine particles contain at least magnesium fluoride hydroxide thereby exhibiting hydrophilicity of the hydrophilic film.

### [Invention 26]

A heat exchange element as discussed in Invention 25, **characterized in that** the ultrafine particles further contain calcium fluoride.

### [Invention 27]

A heat exchange element as discussed in Invention 25 or 26, **characterized in that** the ultrafine particles have an average particle diameter of from 5 to 500 nm.

### [Invention 28]

A heat exchange element as discussed in any of Inventions 25 to 27, **characterized in that** the hydrophilic film further contain a phyllosilicate mineral.

### [Invention 29]

A heat exchange element as discussed in any of Inventions 25 to 28, **characterized in that** the hydrophilic film contains a binder and that the binder bonds the ultrafine particles to the substrate.

### [Invention 30]

A heat exchange element as discussed in any of Inventions 25 to 29, **characterized in that** the hydrophilic film has at its surface a contact angle of water of not more than 30 °.

### [Invention 31]

A heat exchange element as discussed in any of Inventions 25 to 30, **characterized in that** the substrate is one selected from the group consisting of iron, copper, aluminum, brass, stainless steel, tin, brass, titanium, nickel, magnesium and the like and alloys of these, glass, glass fibers, quartz, pottery, silicon carbide, silicon nitride, mullite, carbon, carbon fibers, C/C composite, and carbon nanotube.

### [Invention 32]

A hydrophilic low-reflection film for reducing a light reflection of a surface of a substrate, **characterized in that** the low-reflection film comprises ultrafine particles and that the ultrafine particles contain magnesium fluoride hydroxide thereby exhibiting hydrophilicity.

### [Invention 33]

A hydrophilic low-reflection film as discussed in Invention 32, **characterized in that** the ultrafine particles further contain calcium fluoride.

### [Invention 34]

A hydrophilic low-reflection film as discussed in Invention 32 or 33, **characterized in that** the ultrafine particles have an average particle diameter of from 5 to 500 nm.

### [Invention 35]

A hydrophilic low-reflection film as discussed in any of Inventions 32 to 34, **characterized in that** the hydrophilic low-reflection film contains a binder and that the binder bonds the ultrafine particles to the substrate.

### [Invention 36]

A hydrophilic low-reflection film as discussed in any of Inventions 32 to 35, **characterized in that** the hydrophilic low-reflection film has at its surface a contact angle of water of not more than 20°.

### [Invention 37]

A hydrophilic low-reflection film as discussed in any of Inventions 32 to 36, **characterized in that** a low reflection effect is derived from an optical thin film interference between the substrate and the hydrophilic low-reflection film or a multilayer including the hydrophilic low-reflection film.

### [Invention 38]

A hydrophilic low-reflection film as discussed in any of Inventions 32 to 37, **characterized in that** a low reflection effect is derived from diffuse reflection due to the ultrafine particles that built the hydrophilic low-reflection film.

### BRIEF DESCRIPTION OF THE DRAWING

[Fig. 1] is a drawing showing an X-ray diffraction pattern of particles obtained in EXAMPLE 1-1.
[Fig. 2] is a drawing showing an X-ray diffraction pattern of reagent MgF₂ (REFERENCE EXAMPLE 1).
[Fig. 3] is a drawing showing an X-ray diffraction pattern of particles obtained in EXAMPLE 2-2.
[Fig. 4] is a drawing showing an X-ray diffraction pattern of CaF₂ (REFERENCE EXAMPLE 2).
[Fig. 5] is a drawing showing an X-ray diffraction pattern of particles obtained in EXAMPLE 3-2.
[Fig. 6] is a drawing showing an X-ray diffraction pattern of particles obtained in EXAMPLE 4-1.
[Fig. 7] is a schematic cross-sectional view of an embodiment of a hydrophilic material according to the present invention.
[Fig. 8] is a schematic cross-sectional view of an embodiment of a hydrophilic material according to the present invention.
[Fig. 9] is a schematic cross-sectional view of an embodiment of a hydrophilic material according to the present invention.
[Fig. 10] is a schematic cross-sectional view of an embodiment of a hydrophilic material according to the present invention.
[Fig. 11] is a schematic cross-sectional view of an embodiment of a hydrophilic material according to the present invention.
[Fig. 12] is a schematic cross-sectional view of an embodiment of a hydrophilic material according to the present invention, showing an interface section formed between a substrate 3 and a coating layer 4.

### DETAILED DESCRIPTION

In this specification, a dispersion state means a state in which a solid or a liquid as a dispersoid stably exists in a liquid, for example, by being stirred into a dispersion medium including an organic solvent or water. In a case of a solid dispersoid, it is sometimes referred to as a suspension state. Similar applies to either of a dispersion liquid and a suspension liquid.

Additionally, this specification refers to not only an organic solvent solution in which a dispersiod stably exists in a dispersion medium but also that in which fine particles are stirred thereby stably existing, as an organosol.

In this specification, a fluoride means a compound of metal with fluorine, and a fluoride compound means a compound having at least one bond between metal and a fluorine atom and possibly including a nonmetallic atom.

In metal oxide fine particles, a sol or the organosol, an oxide includes: an oxide represented by *M^{l}Oₐ(OH)_{b}* (where: *M^{l}* is a metallic atom having a valence of n; *a* and *b* are integers not less than 0; and n=2*a*+*b*); a hydroxide; and a mixture of the oxide and the hydroxide.

The organosol of the present invention is an organosol including a magnesium fluoride compound containing at least a hydroxyl group. It may be mixed with other compounds thereby being a complex organosol or may be mixed with one other metal which is in the form of fluoride compound fine particles, a metal oxide or a filler. The magnesium fluoride compound containing a hydroxyl group, which is the main component of the organosol, is sometimes referred to as a magnesium fluoride hydroxide for convenience.

Magnesium fluoride hydroxide serving as the main component of the organosol of the present invention is an extremely-low-crystalline compound having a fluorine atom and a hydroxyl group. It is minute and nearly noncrystalline rather than low-crystalline and exhibits hydrophilicity resulting from the hydroxyl group. Therefore, it is useful as a hydrophilic substrate for heat exchangers such as heat pipes and fins. Additionally, magnesium fluoride hydroxide has low crystallinity so as to be: minute; large in surface area; surface active; low in refractive index; and useful as a hydrophilic low-reflection material, as compared to crystalline magnesium difluoride.

As a method for producing a magnesium fluoride sol in an organic solvent, Patent Document 2 (Japanese Patent Provisional Publication No. 5-208811) discloses a method for directly producing an organosol without passing an aqueous sol, in which a MgCl₂ solution obtained by dissolving anhydrous salt of MgCl₂ in anhydrous ethanol passes a gel thereby producing an organosol solution of MgF₂. In this case a magnesium compound is prepared as a solution. It is considered that the magnesium compound solvates in the solution in one molecular unit in principle thereby forming a homogeneous system. When hydrogen fluoride in the form of solution is fed thereto, and more specifically when it is added at a single stroke as disclosed in Patent Document 2, association between a partially highly concentrated hydrofluoric acid and the raw material magnesium proceeds in a very short time so that produced magnesium fluoride instantaneously grows in number of crystal nucleus to result in gelation (or in sudden growth of the viscosity). With this, it is difficult to obtain a coating liquid suitable for coating, and it is impossible to industrially stably produce the organosol.

The organosol of the present invention is obtained by reacting, in an organic solvent, at least a magnesium compound as a raw material with a hydrofluoric acid-containing solution. The present invention makes it possible to stably prepare the organosol having a particle diameter of from 5 to 500 nm under a relatively convenient method, by adjusting the reaction rate (or the reaction condition) to prevent the progress of localized and high-concentrated gelation.

The magnesium compound as the main raw material may be mixed with two or more other metal compounds as auxiliary raw materials and then reacted in the organic solvent with the hydrofluoric acid-containing solution, as mentioned above, thereby producing a complex organosol. The magnesium compound and the compounds of metals other than magnesium coexist with each other in the reaction, and a fluorination reaction of the magnesium compound and that of the other metal compound are supposed to generally concurrently proceed. It is, actually, assumed that the fluorination reaction rate is different according to the kind of the coexisting metals, due to differences in the solubility of the raw material, the electronegativity and the intensity of ionic bond of product. In fact, it has been verified that the rate of reaction between the magnesium compound and hydrofluoric acid in the coexistence of the magnesium compound and the other metal compound is slow as compared with a case where the raw material magnesium is used singly in the reaction. Furthermore, X-ray diffraction (XRD) has verified that the degree of crystallinity of magnesium fluoride product is greatly distinctive. Namely, with the addition of various kinds of metal compounds, local reaction or aggregation is prevented in production of metal fluoride as compared to a case where the raw material magnesium is used singly. Additionally, the other metal compounds and fluoride compounds thereof act as a fluorination reaction inhibitor in the fluorination reaction of magnesium, thereby significantly decreasing the degree of crystallinity of magnesium fluoride. The other metal compounds and fluoride compounds thereof, therefore, are considered to have a function of inhibiting noncrystallization or crystal formation.

For the purpose of improving hydrophilicity, a filler having a larger particle diameter than the fine particles in the organosol may be brought into the coexistence. This is useful as a complex organosol.

As to the reaction made in the organic solvent, the magnesium compound (the raw material) and/or the other metal compounds are not always required to be dissolved in the solvent and are produced even in a case of a dispersion liquid. Since the production is thus allowed even in the dispersion liquid, usable kinds of the magnesium compound (as the raw material) or the auxiliary raw materials and solvent are increased so that selection from various combinations is permitted. In addition to this, there is an advantage of making the progress of gelation difficult by virtue of a slowdown in reaction rate.

The reaction in a case where the raw material magnesium is dispersed is deemed to proceed in a manner different from reaction mechanisms disclosed in prior examples. Part of the raw material magnesium dispersed in the dispersion medium is in the form of suspended particles. The reaction proceeds gradually inwardly from the suspended magnesium particles with the addition of hydrofluoric acid. However, when produced magnesium fluoride fine particles are deposited on a surface layer to cover a surface, the reaction proceeds with hydrofluoric acid diffused in a solid. In some cases, the particle form of the raw material magnesium may be kept and produced magnesium fluoride may retain the form. In other words, it is supposed from the fact that matters determining a fluorination reaction rate are a reaction substrate and the fluoride compound produced at the initial stage of the reaction, that a method of the invention allows to produce a specific organosol.

The magnesium fluoride compound produced by the present invention is a compound including a hydroxyl group. The inclusion of the hydroxyl group can be confirmed by FT-IR. As a result of measurement by using FT-IR, a film comprising the organosol was found to have a broad peak which is peculiar to a hydroxyl group was observed at 3500-3700 cm⁻¹.

Moreover, the presence of the hydroxyl group is suggested by a compound identification conducted by using X-ray diffraction in Examples as will be discussed below. In Examples, the XRD measurement was carried out by adopting RINT (available from RIGAKU Corporation and adapted to produce diffraction at the angle of diffraction of 10 to 70°). As a result of the X-ray diffraction, an XRD pattern of reference document and that using MgF₂ as reagent (REFERENCE EXAMPLE 1) indicated the main peak at 27.3° having an intensity of 1480 cps and a halfwidth of ±0.11° and sharp peaks each of which has a high intensity and a small halfwidth, which means a good crystallinity. On the other hand, magnesium fluoride hydroxide according to the present invention indicates, in an XRD pattern obtained under the same conditions, peaks having an extremely low intensity, and more specifically, an intensity of about 50 to 160 cps (which is 1/16 to 1/10 of that in the reagent) as will be discussed in EXAMPLE 1. Additionally, the peaks had broad halfwidths of from ±0 to 1.2°. This means that the magnesium fluoride hydroxide is extremely low in crystallinity so as to be nearly noncrystalline rather than crystalline.

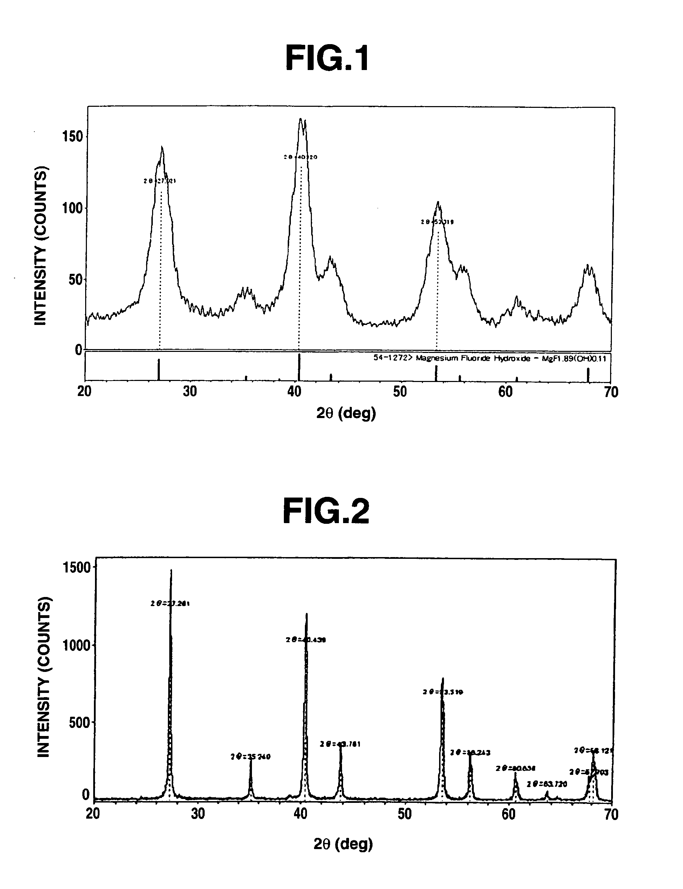

Such a remarkable amorphous property is not disclosed in the prior arts. It is implied that: the present invention is different from magnesium fluoride including crystalline water as shown in Patent Document 3; and the peaks of the present invention are different from the high-crystalline peaks indicated in the XRD spectrum as shown in Fig. 1 of Patent Document 3 in both intensity and form.

Furthermore, Example 3 of Patent Document 4 discloses a system using magnesium chloride as a raw material magnesium. A sol solution dried upon an autoclave treatment is measured by X-ray diffraction, thereby resulting in a description that a matter detected as a product is magnesium fluoride. In other words, it is suggested that a product of this manufacturing method is a high-crystalline magnesium fluoride able to be identified by X-ray diffraction and different from the noncrystalline magnesium fluoride hydroxide of the present invention.

Magnesium fluoride hydroxide contains a fluorine atom and a hydroxyl group and therefore exhibits low refractivity resulting from the fluorine atom and hydrophilicity resulting from the hydroxyl group. For example, in a case of use for an optical application requiring low refractive index, the ratio of contained fluorine atoms is adequately increased thereby achieving the low refractive index. When the ratio of the contained fluorine atoms is large, the hydroxyl content in magnesium fluoride hydroxide is small relative to it. In the manufacturing method of the present invention, however, the hydroxyl groups are not entirely substituted with the fluorine atoms and therefore hydrophilicity is exhibited even if the ratio of the hydroxyl groups is small.

Ultrafine particles of magnesium fluoride hydroxide treated in the present invention can be represented by MgF₂₋ₓ(OH)ₓ (X=0.01-1.0) for convenience. "X" can be adjusted by hydrolyzing the raw material magnesium, with which the ratio of the hydroxyl group to the fluorine atoms can be adjusted. X takes on values ranging from 0.01 to 1.0 as discussed above, but preferably from 0.05 to 0.5. When X is large, the fluorine content is small relative to X, which is not preferable since effects of fluorine such as chemical resistance and the low refractive index becomes hard to exhibit. On the other hand, a small X value may bring about a poor hydrophilicity. In the present invention, however, magnesium fluoride hydroxide provides a hydroxyl-derived hydrophilicity even if the hydroxyl content is small as discussed above, and therefore in normal use the fluorine content is preferably adjusted so as to be high enough to exhibit the effects of fluorine. Concerning hydrolysis, a hydrolytic magnesium such as magnesium alkoxides and calcium oxide is preferably used as the raw material.

The magnesium fluoride hydroxide ultrafine particles contained in the organosol of the present invention have an average particle diameter of from 5 to 500 nm, preferably from 5 to 200 nm, more preferably from 10 to 50 nm. When the average particle diameter of the magnesium fluoride hydroxide ultrafine particles are large, the particles tend to precipitate so that a coating liquid using the fine particles has difficulty in forming a uniform thin layer. When the average particle diameter of the magnesium fluoride hydroxide ultrafine particles are small, a coating liquid using the fine particles tends to be increased in thixotropy, which makes the coating liquid difficult to be managed.
Fine particles of a fluoride of the other metal compound, produced by using the other metal compound as the auxiliary raw material, are preferably within the above-mentioned range. The average particle diameter as discussed herein is worked out from a value measured by using laser light scattering, in accordance with appendix A of JIS Z 8826 (2005).

In producing magnesium fluoride hydroxide of the present invention, the raw material is a magnesium compound as listed later.

The other metal compound serving as the auxiliary raw material is a compound of metal other than magnesium, and examples thereof are: the alkaline earth metals such as calcium, barium and strontium, the alkali metals such as lithium, sodium, potassium, rubidium and cesium, the group 13 elements such as aluminum, gallium and indium, the group 14 elements such as silicon, germanium tin and lead, the group 15 elements such as antimony and bismuth, the group 11 elements such as copper, silver and gold, the group 12 elements such as zinc, the group 3 elements such as scandium and yttrium, the group 4 elements such as titanium, zirconium and hafnium, the group 5 elements such as niobium and tantalum, the group 6 elements such as chromium, molybdenum and tungsten, the group 7 elements such as manganese, the iron family such as iron, cobalt and nickel, the platinum group metals such as ruthenium, rhodium, palladium, osmium, iridium, and platinum. Preferable examples thereof are the alkaline earth metals, the alkali metals, aluminum and iron, and more preferable examples thereof are calcium, barium, lithium, sodium, aluminum and iron. In this specification, these metals are sometimes referred to as "other metals".

Examples of compounds of each of magnesium and the above-mentioned other metals are oxides, hydroxides, carbonates, nitrates, borates, phosphates, sulfates, carboxylates, alkoxides, organic acid salt, metal complexes, and carboxylates such as acetates, oxalates, citrates and octylate. Additionally, metals in the state of simple substances are also acceptable. Moreover, the different compound may be a compound containing two or more metals. Furthermore, the magnesium compound and the other metal compound may be in the form of a hydrate or an organic molecule adduct; however, these are described as including all hydrates and all adducts unless specified as a hydrate or an adduct.

The alkoxides as discussed above are metal alkoxides each of which is represented by the general formula (1):

M(OR)_{Z} (1)

In this formula, M represents magnesium or the above-mentioned other metal, and Z represents the valency number of the metal M. Each OR independently represents any of methoxy group, ethoxy group, n-propoxy group, isopropoxy group, n-butoxy group, s-butoxy group and t-butoxy group. The OR group may be substituted with an organic acid such as an alkyl group, at one or more positions. Examples of carboxylates are metal salts of formic acid, acetic acid, propionic acid, lactic acid, malic acid, tartaric acid, malonic acid, oxalic acid or citric acid. Examples of the other organic acid salts are salts of trifluoromethanesulfonic acid or methanesulfonic acid. Of these, preferable examples are salts of carboxylates having a carbon number ranging from 1 to 4 such as formic acid, acetic acid and propionic acid. Examples of the complexes are those having acetylacetone, trifluoroacetylacetone, hexafluoroacetylacetone or ethyl acetoacetate as a ligand.

Examples of the magnesium compound of the present invention are magnesium chloride, magnesium bromide, magnesium iodide, magnesium carbonate, magnesium carbonate trihydrate, magnesium hydroxide, magnesium oxide, magnesium sulfate, magnesium nitrate, magnesium formate, magnesium acetate, magnesium oxalate, magnesium citrate, acetylacetone magnesium complex. Of these, magnesium chloride, magnesium chloride hexahydrate, magnesium acetate, magnesium acetate tetrahydrate, magnesium hydroxide, acetylacetone magnesium complex (Mg(acac)₂), acetylacetone magnesium complex dihydrate (Mg(acac)₂ • 2H₂O), hexafluoroacetylacetone magnesium dehydrate, trifluoroacetylacetone magnesium, magnesium trifluoromethanesulfonate are preferable.

Furthermore, examples of the other metal compound serving as the auxiliary raw material are calcium chloride, calcium bromide, calcium iodide, calcium carbonate, calcium hydroxide, calcium oxide, calcium sulfate, calcium nitrate, calcium formate, calcium acetate, calcium oxalate, acetylacetone calcium complex, aluminum chloride, aluminum bromide, aluminum iodide, aluminum carbonate, aluminum hydroxide, aluminum oxide, aluminum sulfate, aluminum nitrate, aluminum formate, aluminum acetate, aluminum oxalate, acetylacetone aluminum complex, barium chloride, barium bromide, barium iodide, barium carbonate, barium hydroxide, barium oxide, barium sulfate, barium nitrate, barium formate, barium acetate, barium oxalate, acetylacetone barium complex, iron(II,III) chloride, iron(II,III) bromide, iron(II,III) iodide, iron(II,III) carbonate, iron(II,III) hydroxide, iron(II,III) oxide, iron(II,III) sulfate, iron(II,III) nitrate, iron(II,III) formate, iron(II,III) acetate, iron(II,III) oxalate and acetylacetone iron(II,III) complex; however, the examples are not limited to these. Moreover, these compounds may be previously prepared to be in a state of an aqueous sol or an organosol (as with colloidal silica, colloidal aluminum, colloidal zirconium or colloidal titanium), and further, may be commercially available. Of these, preferable examples are calcium chloride, calcium chloride dihydrate and hexahydrate, calcium acetate and hydrates thereof, calcium nitrate and hydrates thereof, aluminum chloride, aluminum chloride hexahydrate, aluminum acetate and hydrates thereof. These may react in the organic solvent to form an adduct with the organic solvent. Examples of the adduct is an ethanol adduct of calcium chloride.

Combination of the magnesium compound and the other metal compound is not particularly limited. Either of the compound may be in the form of a hydrate or an adduct, in which it is a preferable combination that the magnesium compound is in the form of hydrate or adduct and the other is in the form of anhydride.

Examples of the combination are: magnesium chloride hexahydrate and anhydrous calcium chloride; magnesium acetate tetrahydrate and anhydrous calcium chloride; acetylacetone magnesium complex dehydrate and anhydrous calcium chloride; magnesium carbonate trihydrate and anhydrous calcium chloride; magnesium chloride hexahydrate and anhydrous aluminum chloride; magnesium acetate tetrahydrate and anhydrous aluminum chloride; magnesium carbonate trihydrate and anhydrous aluminum chloride; and acetylacetone magnesium complex dehydrate and anhydrous aluminum chloride.

Moreover, an anhydrous compound is preferably added to a dispersion liquid obtained by dispersing the hydride or the adduct in an organic solvent thereby preparing a dispersion liquid containing the magnesium compound and the other metal compound.

The ratio of the magnesium compound to the other metal compound (the atomic ratio expressed as magnesium/other metal), which depends on the kind of the other metal compound, is within a range of from 0.01/1 to 1/0.01, preferably from 1/10 to 10/1, more preferably from 1/5 to 5/1. Additionally, the ratio is preferably about 1/1.

In a case where the metal oxides discussed above are particularly selected as the other metal compound, a complex organosol containing ultrafine particles of magnesium fluoride hydroxide and those of the metal oxide can be prepared. The organosol is produced in such a manner that the ultrafine particles of magnesium fluoride hydroxide and those of the metal oxides are dispersed or suspended in an organic solvent solution and reacted with a hydrofluoric acid-containing solution. The metal oxides are not particularly limited; however, preferable examples thereof are silica, alumina, titania, zirconia, tin oxide and antimony oxide.

The organosol of the metal oxide may be produced by a common method, for example, by conducting solvent substitution on oxide fine particles obtained upon hydrolysis of a basic chloride or a metal alkoxide. Such a metal oxide organosol can be commercially available. Examples of organo silica sols are: those available from Nissan Chemical Industries, Ltd. under the trade names of methanol silica sol, IPA-ST, IPA-ST-UP, IPA-ST-ZL, EG-ST, NPC-ST-30, DMAC-ST and MEK-ST; those available from JGC Catalysts and Chemicals Ltd. under the trade names of OSCAL1132, OSCAL1232 and OSCAL1332. Examples of organo alumina sols are available from Kawaken Fine Chemicals Co., Ltd. under the trade names of ALUMISOL-CSA55 and ALUMISOL-CSA110AD. Furthermore, organic solvent-based antimony oxide sol can also be listed, whose examples available from Nissan Chemical Industries, Ltd. are Sun Colloid ATL-130 and Sun Colloid AMT-130.

In addition to these, a sol commercially available as an aqueous dispersion liquid is also acceptable upon solvent substitution. Examples of the aqueous sol are: water-based silicon oxide sols available from Nissan Chemical Industries, Ltd. under the trade names of SNOWTEX 40, SNOWTEX O, SNOWTEX C and SNOWTEX N, those available from JGC Catalysts and Chemicals Ltd. under the trade names of Cataloid S-30H, Cataloid SI-30, Cataloid SN and Cataloid SA, those available from ADEKA CORPORATION under the trade names of ADELITE AT-30, ADELITE AT-20N, ADELITE AT-20A, ADELITE AT-20Q, those available from Nippon Chemical Industrial Co., Ltd. under the trade names of SILICADOL-30, SILICADOL-20A and SILICADOL-20B; water-based alumina sols available from Nissan Chemical Industries, Ltd. under the trade names of ALUMINA SOL-100, ALUMINA SOL-200 and ALUMINA SOL-520, and those available from Kawaken Fine Chemicals Co., Ltd. under the trade names of ALUMINA CLEAR SOL, ALUMISOL-10, ALUMISOL-20, ALUMISOL SV-102 and ALUMISOL-SH5; water-based antimony oxide sols available from Nissan Chemical Industries, Ltd. under the trade names of A-1550 and A-2550; water-based zirconium oxide sols available from Nissan Chemical Industries, Ltd. under the trade names of NZS-30A and NZS-30B; water-based tin oxide sols available from Taki Chemical Co., Ltd. under the trade names of Ceramace S-8 and Ceramace C-10; water-based titanium oxide sols available from Taki Chemical Co., Ltd. under the trade names of Tynoc A-6 and Tynoc M-6; and water-based sols comprising tin oxide and antimony oxide and available from Taki Chemical Co., Ltd. under the trade name of Ceramace F-10

Moreover, the magnesium fluoride hydroxide ultrafine particles may be mixed with a specific filler such as philo-silicate thereby to form a complex organosol, for the purpose of improving hydrophilicity.

The organosol for hydrophilic materials, according to the present invention, is obtained by reacting an organic solvent solution containing the magnesium compound which is dispersed, suspended or dissolved therein with a hydrofluoric acid-containing solution thereby producing a solution of the magnesium fluoride compound, followed by addition and dispersion of the filler.

Particles of the filler have the shape of granules, fibers or scales. The filler in the shape of granules or scales is of size ranging from 0.5 to 500 µm, preferably from 1 to 100 µm. The size of the filer having the shape of fibers differs according to the kind of the fibers and therefore ranges from that as small as a carbon nanotube to that as large as glass fibers, and more specifically from 5 nm to 200 µm. The filler has "hydrophilicity" and sometimes further has functions of "adsorption", "retention of bonding to particles" and the like.

Examples of the filler include: phyllosilicate minerals; calcined shell calcium; zeolites; silica gel; anthracite; activated carbon; glass flakes; milled fibers; granular metal oxides; metal fine particles; carbon compounds such as a carbon nanotube, a carbon nanohorn, a fullerene and a buckyball; fibers such as cellulose fibers and aramid fibers; and hydrophilic mucopolysaccharides.

Examples of the phyllosilicate minerals are prehnite, apophyllite, talc, pyrophyllite, mica, vermiculite, chlorite, montmorillonite, kaolinite, dickite, serpentine and sepiolite. The phyllosilicate minerals have a layer structure thereby exhibiting hydrophilicity, and therefore can be expected to improve hydrophilicity and wettability. In addition to this, improvements in adhesion or a binding property can also be expected by virtue of the layer structure. From such viewpoints, the phyllosilicate minerals are preferably used as the filler in the present invention. Anthracite brings about the same effects.

In a case where the calcined shell calcium is used as the filler, a hydrophilic substrate can exhibit a water absorption property and an antibacterial property both of which are derived from the porosity of the calcined shell calcium. The calcined shell calcium is calcium oxide (CaO) or a substance in which calcium oxide coexists with calcium carbonate, which is obtained by calcining shells whose main component before calcination is calcium carbonate thereby gradually causing decarboxylation (or release of carbon dioxide). Calcium carbonate, which is the main component (99 %) before calcination, is gradually converted into calcium oxide by being calcined. Calcination of 1% of organic substances contained in the shells before calcination progresses concurrently with this. When the calcination temperature is high, calcium carbonate is fully converted into calcium oxide; however, when the calcination temperature is low, part is converted into calcium oxide and the rest remains as calcium carbonate.

The component of the used calcined shell calcium is not particularly limited, and it is essential only that part of calcium carbonate is converted into calcium oxide. In the present invention, more specifically, it is preferable to use calcium carbonate (serving as the main component of shells) and calcium oxide (obtained by calcining calcium carbonate), or a substance in which calcium carbonate and calcium oxide coexist with each other. Calcium carbonate and calcium oxide may be used in a state of being mixed with each other (or may be a mixture). The component ratio between calcium carbonate and calcium oxide depends on the calcination temperature and the calcination time and therefore can be suitably adjusted

The calcination temperature applied when producing calcium carbonate is normally within a range of from 500 to 1200 °C. The calcination time is suitably adjusted with taking the calcination temperature and the like into account.

Concrete examples of the calcined shell calcium include the following: a ground product of scallop shell calcined at a high temperature (available from HVC, Inc. and having a 5µm-particle diameter type and a 15µm particle diameter type); and a ground product of scallop shell calcined at a low temperature (available from HVC, Inc. and having a 5µm-particle diameter type and a 15µm particle diameter type). The calcined shell calcium is available from other manufacturers such as NIPPON NATURAL Resource Co.,Ltd., STEP Co.,Ltd., Chafflose Corporation Co., Ltd., and therefore not limited to be of the above-mentioned manufacturer.

Porous materials having an adsorptive activity, such as zeolites, silica gel and activated carbon, are useful as the filler for developing improvements in hydrophilicity and an adsorptive property, similar to the calcined shell calcium.

Preferable examples of the fibrous filler are cellulose-based fibers such as pulp (e.g. kenef), cotton, crosslinking cellulose fibers and regenerated cellulose fibers (e.g. rayon), and fibers including high-hydrophilicity fibrous materials such as aramid fibers, natural fibers, ground silk fibroin and carbon silk. When water is brought into contact with these fibers, water is absorbed into the fibers thereby improving hydrophilicity. Additionally, it is possible to combine these fibrous materials with other porous materials so as to form complex fibers. This filler is also effective in maintaining bonds between ultrafine particles and particles of other fillers.

Carbon compounds such as a carbon nanotube, a carbon nanohorn, a fullerene and a buckyball are also useful as the filler expected to have the same effects, when these are in the form of fibers.

The effect of improving hydrophilicity can be expected also in a case of using hydrophilic mucopolysaccharides as the filler. Examples of mucopolysaccharides are hyaluronic acid, glucosamine, chondroitin sulfate, chondroitin, ketaran sulfate, heparin, heparan sulfate and dermatan sulfate. Of these, hyaluronic acid is preferably used. Hyaluronic acid has a specific property stemmed from a carboxylic group of D-glucuronic acid which forms hyaluronic acid. More specifically, with the interaction between a foldable chain and a negatively charged carboxyl group, hyaluronic acid molecules come to readily develop into a space. Additionally hyaluronic acid molecules has a strong intermolecular force so as to exhibit a relatively great viscosity. Furthermore, hyaluronic acid molecules having such a shape as to occupy a wide range of space in a solution are able to bond to a large quantity of water to form gel.

The size of the filler, which is within a range of from 5 to 500 µm, is several to hundreds times as large as the particle diameter of magnesium fluoride hydroxide. In a case where the magnesium fluoride hydroxide ultrafine particles coexist with the filler, it is considered that the magnesium fluoride hydroxide ultrafine particles adhere to the filler to form a structure surrounding the filler. The adhesion is thought to be excellently compatible because of hydrophilicity stemmed from a hydroxyl group of magnesium fluoride hydroxide and a hydrophilic function of the filler.

The organosol for hydrophilic materials, containing the filler according to the present invention, is prepared by mixing the filler with the organic solvent containing the magnesium fluoride compound thereby dispersing the filler into the organic solvent; however, when producing a magnesium fluoride hydroxide organosol, the filler may be dispersed in the organic solvent together with the raw material magnesium compound and then made to react with a hydrofluoric acid-containing solution.

Referring now to an organosol containing the magnesium fluoride hydroxide ultrafine particles, the manufacturing method of the organosol according to the present invention will be discussed. This method is for producing the organosol of the magnesium fluoride hydroxide ultrafine particles, comprising the following three steps (a), (b) and (c):
(a) a step of adding a hydrofluoric acid-containing solution dropwise to a solution obtained by dispersing/suspending/dissolving a magnesium compound in an organic solvent, under the condition of reducing the reaction rate, thereby producing magnesium fluoride hydroxide ultrafine particles bit by bit;
(b) a step of eliminating a by-product or an excessive amount of hydrogen fluoride; and
(c) a step of conducting solvent substitution or solvent concentration adjustment on a sol formed by the step (b) thereby producing an organosol.

The step (a) is of mixing the hydrofluoric acid-containing solution with one of: a dispersion liquid and a suspension liquid obtained .by dispersing the magnesium compound in the organic solvent;, and a solution obtained by dissolving the magnesium compound in the organic solvent. In this step the magnesium fluoride hydroxide ultrafine particles are produced by reacting the magnesium compound with hydrogen fluoride under the condition of reducing the reaction rate, with which an opportunity for the magnesium compound to meet hydrogen fluoride are excellently reduced thereby allowing adjustment in a magnesium fluoride hydroxide particle formation rate.

When the magnesium fluoride hydroxide particle formation rate is high a colloid is explosively produced in the reaction system and the colloid forms aggregate or a high-thixotropy gel, which is therefore not preferable.

Examples of a method for adjusting the magnesium fluoride hydroxide particle formation rate by reducing the rate of reaction between the magnesium compound and hydrogen fluoride are as follows:
(1) a method of dispersing the magnesium compound in the organic solvent thereby adjusting the reaction so as to progress gradually from a surface of the magnesium compound;
(2) a method of slowing down an dropwise addition rate of the hydrofluoric acid-containing solution thereby adjusting the opportunity for the magnesium compound to react with hydrogen fluoride;
(3) a method of diluting the hydrofluoric acid-containing solution to be added dropwise thereby adjusting the concentration of hydrogen fluoride so as to prevent the reaction from abrupt progressing;
(4) a method of decreasing the reaction temperature thereby inhibiting progress of the reaction; and
(5) a method of slowing down an agitation rate thereby reducing the opportunity for the magnesium compound to meet hydrogen fluoride. These methods are suitably selected in accordance with solubility of the selected magnesium compound in the solvent, viscosity of the solvent, and combination of the magnesium compound and the organic solvent. It will be understood that these methods may be adopted in combination.

The reaction between the magnesium compound and the hydrofluoric acid-containing solution, on the occasion of adding hydrogen fluoride dropwise to the dispersion liquid or the suspension liquid obtained by dispersing the magnesium compound in the organic solvent, starts from a surface at which the magnesium compound particle dispersed in the dispersion liquid or the suspension liquid is brought into contact with the hydrofluoric acid-containing solution. It is thought that the surface of the magnesium compound particle is thus subjected to erosion thereby developing the reaction. The hydroxyl group is considered to be introduced concurrently with or subsequently to this, by a reaction with water contained in the hydrofluoric acid-containing solution.

Slowing down an dropwise addition rate of the hydrofluoric acid-containing solution as discussed in the step (2) reduces the opportunity for the magnesium compound to react with hydrogen fluoride, with which a reaction for producing magnesium fluoride hydroxide seems to progress successively. Concerning the dropwise addition rate of hydrogen fluoride, the hydrofluoric acid-containing solution may be added dropwise, for example, at a rate of 1 to 200 ml/min., preferably of 5 to 100 ml/min. per liter of the dispersion liquid, the suspension liquid or the solution. It is preferable to bring the dispersion liquid, the suspension liquid or the solution into a stirred condition before mixing the hydrofluoric acid-containing solution thereinto.

The magnesium compound particle is required only to be so large as to be able to form the dispersion liquid, the suspension liquid or the solution, and therefore may have an average particle diameter, for example, of from 0.1 to 800 µm, preferably from 0.3 to 500 µm. The average particle diameter is measured according to JIS K 1150 (1994).

Additionally, the content of the magnesium compound in the suspension liquid is, for example, within a range of from 0.01 to 5 mol/L, preferably from 0.05 to 2 mol/L. In a case of a low content, production efficiency of the magnesium fluoride hydroxide ultrafine particles tends to be lowered. Meanwhile, a high content brings about an abrupt gelation (i.e., a sharp increase in viscosity of the mixture solution) when mixing the hydrofluoric acid-containing solution into the suspension liquid thereby preventing even progress of the reaction between the magnesium compound and hydrogen fluoride, which is not preferable.

Usable organic solvents are either protic or nonpolar protic and nonpolar ones. The polar protic organic solvents include alcohols, organic acids and the like. The alcohols include those having a carbon number ranging from 1 to 10, and preferably those having a carbon number ranging from 1 to 4 and glycol ethers having a carbon number ranging from 2 to 20. Examples of the alcohols having a carbon number ranging from 1 to 4 are methanol, ethanol, *n*-propanol, isopropanol, *n*-butyl alcohol, isobutyl alcohol, *sec-*butyl alcohol and *tert*-butyl alcohol. Examples of the glycol ethers having a carbon number ranging from 2 to 20 are ethylene glycol monomethyl ether, ethylene glycol monoethyl ether, ethylene glycol monobutyl ether, diethylene glycol monomethyl ether, diethylene glycol monoethyl ether, triethylene glycol monomethyl ether, triethylene glycol monoethyl ether, and dipropylene glycol monomethyl ether. Preferable alcohols are methanol, ethanol and isopropanol, while preferable glycol ethers are diethylene glycol monomethyl ether, diethylene glycol monoethyl ether and the like.

Examples of the organic acids are formic acid, acetic acid, propionic acid, lactic acid, malic acid, tartaric acid, malonic acid, oxalic acid and citric acid, in which acetic acid or propionic acid is preferable.
Examples of nonprotic organic solvents include ketones such as methyl ethyl ketone and isobutyl ketone, esters such as ethyl acetate and isopropyl acetate and ethers such as diethyl ether and tetrahydrofuran.

As nonpolar solvents, the following are usable: aromatic compounds such as toluene and xylene, and hydrocarbon compounds such as pentane, hexane, cyclohexane and methylcyclohexane.

Furthermore, these polar or nonpolar organic solvents may be used by mixing two or more arbitrarily selected kinds of these at an arbitrary ratio.

The magnesium compound dissolved in the polar solvents is allowed to disperse in and react with the nonpolar solvents, since the polar solvents and the nonpolar solvents are different from each other in solubility of the magnesium compound. For example, with regard to a combination of magnesium chloride and toluene or hexane, it is possible to develop a reaction gradually from a surface of the magnesium compound by suitably slowing the rate under the stirred condition because magnesium chloride does not dissolve in the nonpolar solvents. Furthermore, hydrochloric acid, which is a by-product thereof, also has difficulty in dissolving in toluene so as to be readily taken out of the system. That is, the elimination of the by-product can be much readily achieved as compared with the case of using the polar protic organic solvents.

In a case where the solution dissolving the magnesium compound therein is used for the reaction, the solution can be prepared by dissolving magnesium halide such as magnesium chloride and magnesium bromide, magnesium acetate or the like in the protic solvents.

In a case of using the hydrofluoric acid-containing solution in the reaction, a sudden addition of the solution is not preferable since it brings about a sudden development of the reaction (i.e., a sudden heat of reaction) thereby inducing a dangerous bumping.

The ultrafine particle formation rate can be adjusted in the reaction against the hydrofluoric acid-containing solution, by slowing down the addition rate of the hydrofluoric acid-containing solution (as discussed in step (2)), by reducing the concentration of the hydrofluoric acid-containing solution (as discussed in step (3)), or by decreasing the reaction temperature (as discussed in step (4)). If the reaction conditions are adjusted by the above-mentioned methods, observed is only a slight heat so that the reaction progresses generally at a determined temperature.

The hydrofluoric acid-containing solution has a hydrogen fluoride concentration ranging from 5 to 60 wt %, preferably from 10 to 58 wt %. When the hydrogen fluoride concentration is low, production efficiency of the magnesium fluoride hydroxide ultrafine particles tends to be lowered. On the other hand, when the hydrogen fluoride concentration is high, a colloid is sometimes abruptly formed in the reaction system to cause gelation. This impairs the formation of the magnesium fluoride hydroxide ultrafine particles and therefore is not preferable.

Moreover, the above-mentioned range of the hydrogen fluoride concentration allows a ready adjustment of the formation rate as discussed in the step (3). The hydrofluoric acid-containing solution can be prepared by adding a solvent to hydrofluoric acid, the solvent including water, lower alcohols such as methanol, alcohol and isopropanol, ketones such as acetone and methyl ethyl ketone, esters such as ethyl acetate and isopropyl acetate, and ethers such as diethyl ether and tetrahydrofuran.

The reaction temperature in this reaction is required only to be under such conditions as to successively advance the reaction and therefore not particularly limited; however, normally the reaction is carried out at a temperature of not less than -20 °C and not more than the boiling point of the solvent, and more specifically, at a temperature ranging from -20 to 80 °C, preferably from 0 to 50 °C. A temperature of less than -20 °C not only reduces the reaction rate but also requires a cooling device, and therefore is not preferable. In a case of a temperature of more than 80 °C, hydrogen fluoride having a low boiling point volatilizes as soon as it is added so as not to be fully used and evolves hazardous hydrogen fluoride gas. Additionally, the reaction is abruptly advanced immediately after the addition of hydrogen fluoride so that a produced colloid is locally flocculated or gelated. Therefore, it is not preferable.

The pressure adopted in the reaction system is not particularly limited; however, it is convenient to carry out the reaction at around normal atmospheric pressure, and more specifically, at a pressure within a range of from 0.05 to 1 MPa, preferably from 0.05 to 0.5 MPa. Anyway, atmospheric conditions without particularly regulating the pressure are good enough to carry out the reaction.

As discussed above, in the manufacturing method of the present invention, hydrophilicity is sufficiently exhibited even if the ratio of fluorine atoms to magnesium is increased. Therefore, it is preferable to adjust the ratio of fluorine atoms to be large thereby imparting the properties of fluorine atoms. Hence the mixture ratio between the magnesium compound and hydrogen fluoride can be determined on the condition that the magnesium compound is fully consumed. In other words, the number of moles of hydrogen fluoride is 1 to 2 times the number obtained by multiplying the number of moles of Mg by the valency number, and more specifically, preferably from 1 to 1.5 moles, more preferably from 1 to 1.2 moles. These ranges are preferable also when some other metal compounds are contained as the auxiliary raw material with reference to the sum of values obtained from each of magnesium and the other metals by multiplying the number of moles by the valency number.

The by-product (or unreacted hydrogen fluoride in a case where hydrogen fluoride is excessively added) can be eliminated by conducting a treatment as discussed in the step (b) on the solution obtained by the manufacturing step (a). The treatment as discussed in the step (b) has the following three possible manners suitably selected in accordance with differences in solubility in the solvent and/or intended uses of the by-product. It will be understood that these can be used for the treatment in combination.

(b-1) a step of conducting the treatment at room temperature or under a heating condition thereby evaporating and eliminating the by-product or an excessive amount of hydrogen fluoride

(b-2) a step of conducting the treatment under a reduced pressure thereby eliminating the by-product or the excessive amount of hydrogen fluoride

(b-3) a step of conducting ultrafiltration thereby eliminating the by-product or the excessive amount of hydrogen fluoride

The by-product formed in this reaction is caused by anion component or ligand of the magnesium compound. When the anion component is an inorganic compound, an inorganic by-product is formed. For example, when the magnesium compound is magnesium chloride, hydrochloric acid is to be regarded as the by-product. In a case of calcium carbonate the by-product is carbon dioxide. In a case of magnesium nitrate the by-product is nitric acid, and in a case of magnesium hydroxide the by-product is water. On the other hand, when the anion component is an organic compound, an organic by-product is formed. For example, in a case of magnesium acetate the by-product is acetic acid. In a case of magnesium methoxide the by-product is methanol, and in a case of acetylacetone magnesium the by-product is acetylacetone.

The treatment as discussed in (b-1) is relatively convenient and therefore adequate when eliminating a by-product having a relatively low boiling point, such as carbon dioxide, hydrochloric acid and hydrogen fluoride, though not always ensured because it depends also on solubility of the by-product in the solvent. In this treatment, the by-product or the excessive amount of hydrogen fluoride is taken out of the system by stirring the solution at room temperature or under a heating condition or by introducing nitrogen gas with making reflux at around the boiling point of the solvent so as to purge them. However, not all the by-product and hydrogen fluoride are eliminated. Furthermore, it is possible to intentionally leave the by-product and hydrogen fluoride mixed in the system by shortening the treatment time.

A substrate made out of glass or metallic material such as iron, copper, aluminum, brass, stainless steel and aluminum is deemed to be bonded at its surface eroded by hydrogen fluoride to magnesium fluoride hydroxide thereby being improved in adhesiveness, so that a method for leaving hydrogen fluoride to remain is effective. Hydrogen fluoride left to remain preferably has a concentration of from 0.1 to 5 mass %.

The treatment as discussed in (b-2) is adequate in a case of eliminating a by-product having a relatively high boiling point, such as methanol and acetic acid, or in a case requiring a more reliable elimination of the by-product having a low boiling point. As the treatment carried out under a reduced pressure, a method of evaporating the solvent by the use of an evaporator is convenient. The by-product and the excessive amount of hydrogen fluoride are eliminated in the process of evaporating the solvent.

Furthermore, the ultrafiltration treatment as discussed in (b-3) is conducted when it is required to sufficiently eliminate the inorganic by-product. However, organic solvents may cause damage to a filter used in the ultrafiltration or dissolve a housing (or a vessel) so that a usable combination of the solvent and the solution is preferably a lower alcohol (e.g. methanol) and a solution not causing damage to the filter.

On the other hand, an acceptable amount of remaining by-product or hydrogen fluoride (which should be controlled) depends on the intended purpose of the organosol of the magnesium fluoride hydroxide ultrafine particles. The organosol used for optical purposes such as an antireflective agent is required to have transparency at shorter wavelengths, in which it is necessary to eliminate carbon-based compounds as much as possible and therefore the treatment as discussed in (b-2) is desired. Meanwhile, the organosol used as a hydrophilic material may be allowed to contain some electrolyte. In this case the treatment as discussed in (b-1) may be enough. Particularly when forming the organosol in a system for producing the inorganic by-product by using the polar protic solvent such as lower alcohols (e.g. a system where magnesium chloride or magnesium chloride hexahydrate is used as the magnesium compound and methanol is used as the solvent) and when using the organosol for the purpose benefiting from hydrophilicity, the treatment as discussed in (b-1) is appropriate.

The step (c) is of conducting solvent substitution or solvent concentration adjustment on the sol formed by the step (b) thereby producing the organosol ready to use. When using magnesium fluoride hydroxide for optical purposes as discussed above and when the substrate is a plastic material such as polyethylene terephthalate (PET) and cellulose triacetate (TAC), the solvent is preferably nonpolar one. The polar protic solvent adopted for optical purposes in a system as the reaction solvent is required to be substituted with the nonpolar solvent. In this case, the polar protic solvent can be substituted with a desired nonpolar solvent after performing concentration under a reduced pressure of the step (b-2). Even if the nonpolar solvent is used for the production of the organosol it will be understood that the nonpolar solvent may be substituted with the same solvent or any other nonpolar solvents in the treatment as discussed in the step (b-2).

When using magnesium fluoride hydroxide for the purpose benefiting from hydrophilicity, the material of the substrate is to be such as iron, copper, aluminum, brass, stainless steel, titanium, tin, silicon and carbon, and therefore the polar protic solvent such as lower alcohols is suitable in connection with wettability against the substrate. A solution produced in a system using the polar protic solvent may undergo the treatment as discussed in the step (b) and then may be adjusted in terms of concentration by using the polar protic solvent. It will be understood that a solution produced in a system using the nonpolar solvent may be substituted with the polar protic solvent to adjust concentration upon conducting the treatment as discussed in the step (b-2).

The organosol of the magnesium fluoride hydroxide ultrafine particles is thus produced though the steps (a), (b) and (c). The fine particles have an average particle diameter of from 5 to 500 nm; however, depending on manufacturing conditions, there may be cases where the fine particles having a large particle diameter is obtained as the main component. When the magnesium fluoride hydroxide ultrafine particles are used for optical purposes as discussed above, the particle diameter is needed to be adjusted to not larger than 50 nm in relation to haze. In this case it may be required to mechanically pulverize the produced organosol ultrafine particles. Additionally, the particles made into a coating having a small particle diameter can be increased in surface area so as to be suitably adjusted in particle diameter as needed, which is advantageous also in the purposes benefiting from hydrophilicity.

The pulverizing method is not particularly limited and examples thereof are wet grinding such as homogenizers and bead mills. These means are capable of dispersion and emulsification in addition to pulverization and therefore preferable. With such a posterior pulverization, the organosol of the ultrafine particles having a particle diameter of not larger than 50 nm can be produced.

The organosol containing magnesium fluoride hydroxide is produced by the producing method as discussed above. Also in a case of using the other metal compound as the auxiliary raw material or in a case of letting the filler coexistent, the organosol can be produced according to the producing method as discussed above.

Magnesium fluoride hydroxide according to the present invention exhibits an excellent hydrophilicity. Hence, it is possible to produce a hydrophilic substrate by applying the organosol as a coating liquid so as to form a thin layer containing the magnesium fluoride hydroxide ultrafine particles. The hydrophilic substrate will be discussed below. The solvent of the organosol can be suitably selected in accordance with the substrate used therewith.

The hydrophilic substrate according to the present invention is characterized by comprising a substrate and a coating layer formed on the substrate, in which ultrafine particles are dispersed at least at a surface of the coating layer and contain magnesium fluoride hydroxide.

In order that the coating layer exhibit hydrophilicity, a hydroxyl group is needed to be exposed at the surface of the coating layer. In the present invention, the ultrafine particles are dispersed at least at the surface of the coating layer and is so formed as to contain magnesium fluoride hydroxide, thereby establishing such a structure as to expose the hydroxyl group at the surface of the coating layer. Moreover, the ultrafine particles are so formed as to contain magnesium fluoride hydroxide and therefore adhesiveness of the ultrafine particles to the substrate is improved.

Furthermore, the hydroxyl group is derived from fluoride hydroxide compounds and therefore hardly disappears. With this, the hydrophilic substrate exhibits hydrophilicity over a long period of time.

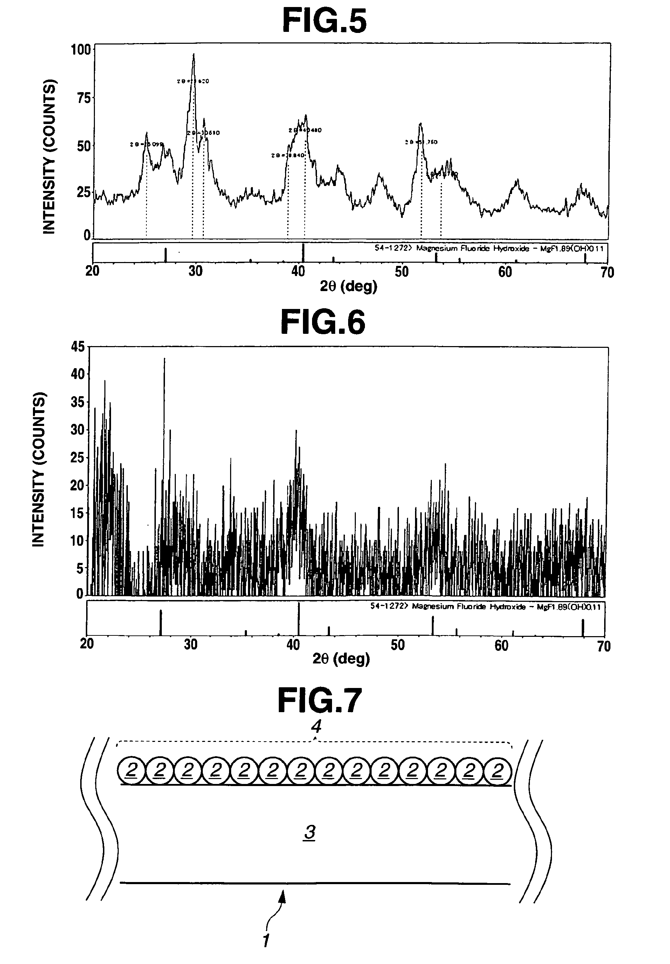

An example of the hydrophilic substrate according to the present invention will be discussed with reference to drawings. Figs. 7 to 12 are schematic sectional views of an embodiment of a hydrophilic substrate 1 according to the present invention.

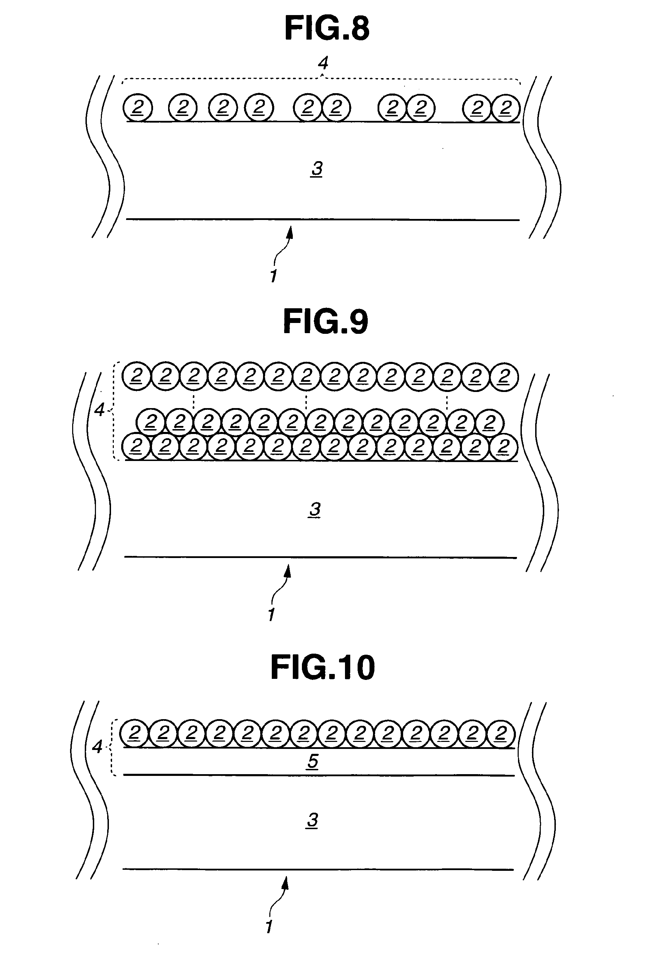

A coating layer 4 is formed on a substrate 3. Ultrafine particles 2 are so dispersed as to be exposed at a surface of the coating layer 4. Fig. 7 shows an embodiment where the ultrafine particles 2 are disposed on the substrate 3. Furthermore, the coating layer 4 may be formed by disposing the ultrafine particles 2 in such a manner that the substrate 3 is exposed as shown in Fig. 8. Additionally, as shown in Fig. 9, the coating layer 4 may be formed by stacking the ultrafine particles 2.

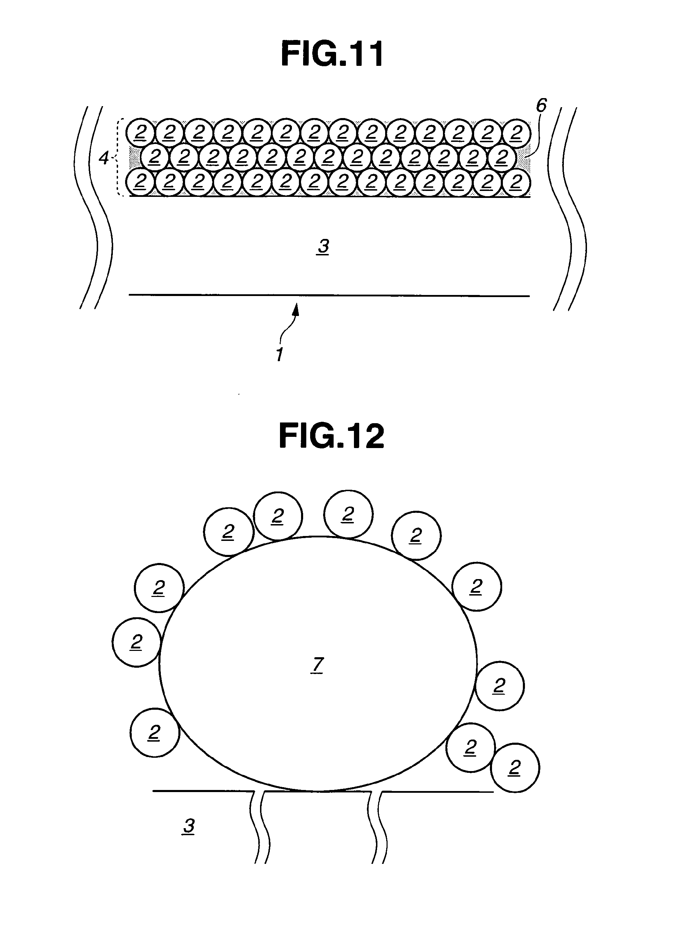

The ultrafine particles 2 may be bonded to the substrate 3 by using a binder. Also acceptable are a configuration disposing a binder layer 5 between the ultrafine particles 2 and the substrate 3 as shown in Fig. 10, a configuration filling clearances formed among the ultrafine particles 2 with a binder 6 as shown in Fig. 11, and the like.

The hydrophilic substrates shown in Figs. 7 to 12 are no more than embodiments according to the present invention, so that the best mode of the hydrophilic substrate is suitably selected depending on applications thereof. In applications requiring the surface to have a good wettability, such as soil-resistant tiles, soil-resistant wares (sanitary wares), heat pipes and fins, a configuration as shown in Figs. 7, 9 and 10 is preferable. Though the configuration using the binder 6 as shown in Fig. 11 may cause reduction in hydrophilicity at the surface of the coating layer 4, the hydrophilic substrate having a configuration as shown in Fig. 11 can be used for the above-mentioned applications only by selecting the amount and the kind of the binder within such a range as to minimize the reduction in hydrophilicity.

When a porous material is adopted as the substrate 3 and the hydrophilic substrate 1 is used as a membrane filter or the like, there comes about a necessity to make a polar solvent (such as water) reach the substrate 3. In this case, the hydrophilic substrate having a configuration as shown in Figs. 7 to 12 is preferably applied.

The configuration where the binder 5 or 6 is disposed may be used for the applications by imparting permeability to a binder section or by adjusting the amount of the binder 6 thereby imparting permeability to the coating layer 4 itself.

When the substrate is made of glass, mirror or the like and when the hydrophilic substrate 1 is used as an antifogging article, antifouling article, dew condensation-preventing article or the like, a hydrophilic substrate as shown in Figs. 7 to 12 can be used. In view of the adhesiveness of the ultrafine particles to the substrate 3, the hydrophilic substrate preferably has a configuration as shown in Fig. 10 or 11.

The ultrafine particles 2 is preferably stemmed from an organosol formed by dispersing magnesium fluorides therein, the magnesium fluorides being obtained by reacting magnesium salts with a hydrofluoric acid-containing solution in an organic solvent.

The ultrafine particles 2 is preferably in the form of being dispersed in a coating liquid for forming the coating layer 4. Thus obtained organosol not only promotes the stability of the coating liquid but also facilitates the preparation of the coating liquid.

In a case where the substrate 3 is constructed from polyethylene terephthalate (PET) of cellulose triacetate (TAC), the solvent is preferably a nonpolar one. Meanwhile, in a case where the substrate 3 comprises a material inferior in wettability (e.g. metals, silicon and carbon), the solvent for the coating liquid is preferably a polar protic one such as lower alcohols in order to reduce the surface tension of the coating liquid.

The ultrafine particles 2 can be used when these have been turned into magnesium fluoride hydroxide at its surface or when most of (or the whole of) these have been turned into magnesium fluoride hydroxide. The ultrafine particles 2 which have been turned at its surface into magnesium fluoride hydroxide may be produced by fluorinating and hydroxylating metallic magnesium particles with the hydrofluoric acid-containing solution or by coating surfaces of particles of metal oxide (e.g. silicon oxide, titanium oxide, aluminum oxide, zirconium oxide, tantalum oxide, niobium oxide, iron oxide, ITO, IZO (ZnInOxide), ATO and AZO (AlZnOxide)).

In a case where the substrate 3 comprises magnesium metal or magnesium alloys, the substrate 3 may be reacted at its surface with the hydrofluoric acid-containing solution thereby being provided on its surface with a layer comprising a deposited magnesium fluoride hydroxide. The layer may be referred to as the coating layer 4.

The coating layer 4 may have, at least at its surface, a configuration in which other ultrafine particles other than the magnesium fluoride hydroxide-including ultrafine particles are mixed. Examples of the other ultrafine particles are: compounds obtained by fluorinating the metal compounds discussed above as "other metal compound (auxiliary raw material)", such as calcium fluoride, aluminum fluoride and cryolite (Na₃AlF₆); AlPO₄; SiO₂; Al₂O₃; ZrO₂; TiO₂; ZnO₂; SnO₂; ITO; ATO; and apatite. In a case of TiO₂, either of a rutile type or a anatase type are acceptable, and more specifically, TiO₂ ultrafine particles of the anatase type are preferably used when needed to combine a photocatalytic property.

Fluoride of the other metal compound is obtained at the time of preparation of the magnesium fluoride hydroxide ultrafine particles by being reacted with hydrogen fluoride together with the magnesium compound, as discussed above.

When calcium fluoride is introduced as the other ultrafine particles to the hydrophilic substrate in which the other ultrafine particles and the magnesium fluoride hydroxide-including ultrafine particles are mixed, it is observed that hydrophilicity of the coating layer 4 and adhesiveness of the coating layer 4 to the substrate 3 are maintained. Its introduced amount is preferably up to 70 mass % and more preferably up to 50 mass %. When aluminum fluoride or cryolite is introduced as the other ultrafine particles and when its introduced amount is up to 30 mass %, improvement of the coating layer 4 in wear resistance is observed.

Moreover, the coating layer 4 may contain a filler. Usable fillers are within a range of from 0.5 to 500 µm and preferably from 1 to 100µm in size and in the shape of granules, fibers or scales. Examples of the fillers are: phyllosilicate minerals; glass flakes; milled fibers; zeolites; silica gel; granular metal oxides; calcined shell calcium; metal fine particles; carbon compounds serving as nanocarbons, such as a carbon nanotube, a carbon nanohorn, a fullerene and a buckyball; fibers such as cellulose fibers and aramid fibers; and hydrophilic mucopolysaccharides.

A configuration established in a case where the coating layer 4 contains the filler may be such as to expose the filler at the surface of the coating layer 4 and/or such as to adhere the ultrafine particles to the filler. The magnesium fluoride hydroxide-including ultrafine particles are better adhered to the substrate 3 than the filler so as to function as a binder for adhering the filler to the substrate 3.

An example of the hydrophilic substrate according to the present invention in a case of using the filler will be discussed with reference to drawings. Fig. 12 is a schematic sectional view of an interface section formed among the hydrophilic substrate 1, the substrate 3 and the coating layer 4 according to the present invention. When a porous substrate is adopted as the substrate 3, the ratio of the filler closing porous section of the substrate 3 at the time that the filler is applied thereto is reduced so as to provide a hydrophilic substrate which takes full advantage of the porosity of the substrate 3. The filler may be applied and adhered to the substrate 3 in advance. Furthermore, the filler to which the ultrafine particles 2 are adhered may be applied and adhered to the substrate 3 after the ultrafine particles 2 are adhered to the filler. Furthermore, the filler may be applied and adhered to the substrate 3, concurrently with ultrafine particles 2.

It is preferable that the ultrafine particles have an average particle diameter of from 5 to 500 nm. An average particle diameter of less than 5 nm tends to downsize the clearances formed among the particles, so that the number of hydroxyl group exposed at the coating layer 4 is apt to be small thereby sometimes reducing hydrophilicity of the coating layer 4. On the other hand, an average particle diameter of more than 500 nm tends to decrease a contact area over which the coating layer 4 is in contact with the substrate 3 and tends to multiply the clearances that the coating layer 4 has, which sometimes reduces the adhesiveness of the ultrafine particles 4 to the substrate 3 or the hardness of the coating layer 4 itself.

When the substrate is made of glass, mirror or the like and when the hydrophilic substrate 1 is used as an antifogging article, antifouling article, dew condensation-preventing article or the like, the coating layer 4 is required to have a visible light-permeability, so that the average particle diameter is within a range of from 5 to 200 nm, preferably from 5 to 100 nm and more preferably from 10 to 50 nm.

Additionally, the average particle diameter is obtained by repeating the following procedure five times. Of all particles appear to a picture (a scaling factor at which the picture of the ultrafine particles becomes clear) when observing an arbitrary location in a cross-section of the coating layer 4 and at an outer surface of the coating layer 4 by using an electron microscope, those exposed to the outer surface of the coating layer 4 are individually measured in terms of its maximum diameter, and then results thereof are averaged.

Additionally, the ultrafine particles 2 is preferably in the form of a sphere.

When the coating layer 4 is required to have a visible transmittance and when the hydrophilic substrate 1 has a configuration formed stacking the ultrafine particles as shown in Fig. 9 or 10, the average particle diameter is determined by repeating the following procedure three times thereby obtaining three measurement values and by averaging these three values and the above-mentioned value. Of all particles appear to a picture (a scaling factor at which the picture of the ultrafine particles becomes clear) when observing an arbitrary location in a cross-section of the coating layer 4 and except for the outer surface of the coating layer 4 by using an electron microscope, those exposed to the outer surface of the coating layer 4 are individually measured in terms of its maximum diameter, and then results thereof are averaged.

The hydrophilic substrate 1 may have a configuration where the coating layer 4 includes a binder as shown in Fig. 10 or 11. With such a configuration as to include the binder, the adhesiveness of the ultrafine particles 2 to the substrate 3 is improved. Both the binder 5 which forms a layer as shown in Fig. 10 and the binder 6 with which the clearances formed among the ultrafine particles 2 are filled as shown in Fig. 11 are adoptable.

The hydrophilic substrate 1 including the binder 5 can transfer hydrophilicity of the ultrafine particles themselves to a surface layer of the coating layer 4. The hydrophilic substrate 1 including the binder 6 can be a hydrophilic substrate 1 excellent in productivity, since a coating liquid is formed containing a precursor of the binder 6 and the ultrafine particles 2 and the coating layer 4 is formed through a process of applying the coating liquid to the substrate 3.

Examples of the binders 5 and 6 are: metal oxides such as silicon oxide, titanium oxide, aluminum oxide, zirconium oxide, tantalum oxide, niobium oxide, iron oxide, ITO, ATO and magnesium oxide; water-soluble silicates such as alkali silicates, e.g. lithium silicate and sodium silicate; polyvinyl alcohol; urethane resin having a surfactant as a pendant group; silicone resin; and fluorine-containing resin.

The metal oxides are obtained, for example, by subjecting a precursor of the metal oxides to hydrolysis and polycondensation in a solvent (e.g. an alcoholic solvent having a carbon number ranging from 1 to 4. Examples of the precursor includes metal alkoxides, metal oxyhalides and metal halides.

The coating layer 4 of the hydrophilic substrate 3 according to the present invention preferably has at its surface a contact angle of water of not higher than 30°, more preferably not higher than 15°, much more preferably not higher than 5°. The contact angle is defined by that measured in accordance with JIS R 3257 (1999) from a contact angle formed between a surface of a coating layer and a water droplet. The lower limit of the contact angle is not particularly limited; however, it is sometimes defined as 0° for convenience when difficult to be measured owing to a good wettability.

Additionally, in order to improve hydrophilicity of the coating layer 4, it is preferable that the magnesium fluoride hydroxide-including ultrafine particles occupies the area of the surface layer in which the magnesium fluoride hydroxide-including ultrafine particles are dispersed within a range of not smaller than 30 vol. %, more preferably of not smaller than 50 vol. %, much more preferably of not smaller than 60 vol. %, and most preferably of not smaller than 80 vol. %. The upper limit thereof is not particularly limited and may be 99 vol. % or 95 vol. %.

Moreover, the ultrafine particles exist in the coating layer 4 preferably at a filling ratio of from 40 to 90 vol. %, more preferably from 50 to 80 vol. % of the total range of the coating layer 4, which is preferable since the polar solvent such as water can readily reach the substrate 3 through the coating layer 4 while keeping hydrophilicity the coating layer 4 has at its surface. Additionally, the filling ratio is adoptable also in the configuration formed having the binder 6 as another embodiment.

The substrate 3 is preferably selected from the group consisting of porous substrates, inorganic glass substrates, plastic glass substrates, metal substrates and ceramic substrates. Examples of the porous substrates are nitrocellulose, polyvinylidene fluoride, nylon and porous silica. These are preferably used as a membrane filter for water treatment or the like. Moreover, Examples of the inorganic glass substrates are sheet-shaped substrate such as soda-lime silicate glass, borosilicate glass, aluminosilicate glass, barium borosilicate glass and quartz glass. Particularly preferable are those produced by float process. Further examples of these glass substrates are: clear glass products; colored glass products such as a green one and a bronze one; functional glass products such as UV cut glass and IR cut glass; safety glass products such as tempered glass, semi-tempered glass and laminated glass; and mirrors.

Examples of the plastic glass substrates are polycarbonate (PC), polymethyl methacrylate (PMMA), polyethylene terephthalate (PET) and polyimide. Examples of the metal substrates are aluminium, stainless steel, copper, steel, brass, magnesium, magnesium alloy and silicon. Examples of silicide are SiC, silicon nitride, boron nitride and aluminium nitride. Examples of the ceramic substrates used as tiles, sanitary wares or the like are calcined substance or the like of metal oxides such as: silica; alumina; zirconia; and titania.

Usable substrates have a thickness ranging from 0.1 to 10.0 mm and may be in the form of a sheet, a pipe, a string or a sphere or in the form having the radium of curvature. The form thereof is suitably selected according to applications of the hydrophilic substrate.

The coating layer 4 is preferably formed in such a manner as to apply the coating liquid to the substrate 3 and then to dry it, preferably to heat it. A method for applying the coating liquid to the substrate is suitably selected from common application methods including: hand painting such as spin coating, spray coating, roll coating and brush coating; dipping method, print coating.

The solution that contains the magnesium fluoride hydroxide-including ultrafine particles and the solvent, or preferably the above-mentioned organosol, is applied to the substrate 3. As the solvent, those as discussed in the description about the organosol may be used. Additionally, the other ultrafine particles, the filler, the binder or the precursor of the binder may be introduced to the coating liquid, as required.

The coating liquid may be adjusted in its composition. Examples of composition adjustment for the solution are: to add an acidic or alkali substance in order to pH; to mix a surfactant in order to improve wettability of the coating liquid to the substrate; to mix polyethylene glycol or polyvinyl alcohol in order to adjust the viscosity of the coating liquid; and to mix the precursor of the binder 6.

The coating liquid is applied to the substrate 3, followed by drying at a temperature of from 20 to 120 °C, preferably from 50 to 100 °C, thereby forming the coating layer 4. For the purpose of increasing the hardness of the coating layer 4, heating and calcination are preferably conducted upon drying. The heating temperature may be determined in accordance with the maximum allowable temperature. However, in order to take advantage of the properties of hydroxyl-containing magnesium fluoride ultrafine particles, the heating temperature is set at not higher than 500 °C, preferably not higher than 400 °C, much more preferably not higher than 300 °C.

The hydrophilic substrate can be used for a member required to be hydrophilic, such as a heat exchange element. More specifically, the heat exchange element according to the present invention comprises a substrate and a hydrophilic film disposed on the substrate and is **characterized in that** the hydrophilic film consists of ultrafine particles including magnesium fluoride hydroxide thereby exhibiting hydrophilicity.

The film is needed to be coated at its surface with hydroxyl groups in order that the surface exhibits hydrophilicity. The hydrophilic film of the present invention consists of the ultrafine particles including magnesium fluoride hydroxide, thereby establishing a structure in which the hydroxyl groups are exposed at the surface of the film. Additionally, the ultrafine particles include magnesium fluoride hydroxide, so that adhesiveness of the ultrafine particles to the substrate is improved.

The hydroxyl groups the ultrafine particles has are smaller in number than that a normal metal hydroxide has, but its hydrophilicity is sufficiently developed. Moreover, magnesium fluoride hydroxide according to the present invention is chemically stable than normal metal hydroxides, so that the heat exchange element having the hydrophilic film consisting of the above-mentioned ultrafine particles is considered to be superior in reliability in long-term use.

The ultrafine particles may contain fluoride particles of other metal, particularly preferably calcium fluoride fine particles. With the introduction of calcium fluoride, the film is found to be improved in hydrophilicity and durability. The amount of calcium fluoride is not particularly limited; however, more preferably not higher than 75 wt %, concerning the hydrophilicity.

Furthermore, the ultrafine particles preferably has an average particle diameter of from 5 to 500 nm. An average particle diameter of less than 5 nm cannot provide the film with a sufficient film thickness thereby being low in number of exposed hydroxyl groups, which results in degradation of hydrophilicity. On the other hand, an average particle diameter exceeding 500 nm causes condensation among particles to induce precipitation, so that a stable solution cannot be obtained. Additionally, a contact area in which the coating layer 4 is in contact with the substrate 3 is decreased so as to reduce the adhesiveness of the ultrafine particles 4 to the substrate 3.

The hydrophilic film composition including magnesium fluoride hydroxide, calcium fluoride and the like may also include phyllosilicate. As discussed above, phyllosilicate is characterized by having a tetrahedral sheet-like arrangement and has properties of exchanging positive ions and of taking water between layers, thereby exhibiting an excellent hydrophilicity. The mixture ratio to magnesium fluoride hydroxide is not particularly limited in view of maintaining hydrophilicity but required to be not larger than 50 wt % in view of maintaining adhesiveness to a practical substrate.

Additionally, the hydrophilic film may include the binder and the binder may contribute to the bonds between the ultrafine particles and the substrate. Examples of the binder include metal oxides, hydroxides, phosphates and the like. Foe example, metal oxides are able to adhere phyllosilicate particles to the substrate with its function as the binder, the function being of establishing bonds between the particles at the time of metal alkoxide's polycondensation in so-called sol-gel process and of forming a glass substance as a film through drying and calcining processes. Examples of the metal alkoxide are titanium, silica, zirconia, boron, phosphorus, iron, tin and nickel, in which silica, titanium and zirconia are preferable. Moreover, the hydrophilic film preferably has at its surface a water contact angle of not larger than 30°.

Furthermore, substrates usable for the heat exchange element are metals including iron, copper, aluminum, brass, stainless steel, tin, brass, titanium, nickel, magnesium and the like and alloys of these, ceramics substrates including glass, glass fibers, quartz, pottery, silicon carbide, silicon nitride, mullite and the like, and carbon materials including carbon, carbon fibers, C/C composite, carbon nanotube and the like. The substrate for the heat exchange element is demanded to be high in heat conductivity in view of its applications. All of the substrates as discussed above are preferable, and additionally the ultrafine particles according to the present invention have a good adhesiveness to these.

Moreover, the hydrophilic substrate according to the present invention can be used as a low-reflection film material which reduces light reflectivity of a surface of the substrate.

Magnesium fluoride hydroxide according to the present invention has a refractive index generally equal to or slightly lower than that of magnesium fluoride (n=1.3-1.38) and therefore preferable as the low-reflection film material. In addition to this, magnesium fluoride hydroxide has an excellent hydrophilicity, so that an antifouling property is exhibited and therefore soil adhered thereto can be readily washed out.

The present invention provides a hydrophilic low-reflection film for reducing a light reflection of a surface of a substrate, the film being **characterized in that** the low-reflection film comprises ultrafine particles and that the ultrafine particles contain magnesium fluoride hydroxide thereby exhibiting hydrophilicity.

In addition to the ultrafine particles, fluoride particles of other metal (particularly preferably calcium fluoride fine particles) may be mixed thereto. The introduced amount of calcium fluoride is not particularly limited; however, its refractive index (n=1.4-1.43) is slightly higher than that of magnesium fluoride hydroxide, though within an acceptable range as the low-reflection film material, so that the introduced amount is preferably low when a lower reflection is required. In regard to hydrophilicity, it is more preferably not more than 70 wt %. With the introduction of calcium fluoride, improvement in water resistance is observed.

Moreover, the ultrafine particles preferably has an average particle diameter of from 5 to 500 nm. An average particle diameter of less than 5 nm cannot provide the film with a sufficient film thickness thereby being low in number of exposed hydroxyl groups, which results in degradation of hydrophilicity. On the other hand, an average particle diameter exceeding 500 nm causes condensation among particles to induce precipitation, so that a stable solution cannot be obtained. Additionally, a contact area in which the particles are in contact with the substrate is decreased so as to reduce the adhesiveness of the ultrafine particles to the substrate.

In a case of using the hydrophilic substrate as a low-reflection material, particularly as a low-reflection film which utilizes an optical thin film interference, the ultrafine particles are required to have an average particle diameter of not longer than wavelengths of an intended light. For example, when a normal visible light is intended to be used, the preferable particle diameter is not larger than 300 nm. In a case of an antiglare film which provides a low-reflection effect by utilizing diffuse reflection, there is not such a limitation.

Additionally, the hydrophilic film may include the binder and the binder may contribute to the bonds between the ultrafine particles and the substrate. Examples of the binder include metal oxides.

Metal oxides are able to function as the binder by so-called sol-gel process, for example, by polycondensation of metal alkoxide. Silica obtained by using silicon alkoxide is low in refractive index and therefore preferable for the purpose of achieving the effect of low reflection.

Moreover, it is preferable that the hydrophilic film has at its surface a contact angle of water of not higher than 30°.

Additionally, the effect of low reflection may be derived from: an optical thin film interference that causes between the substrate and a hydrophilic low reflection film or a multilayer including the hydrophilic low reflection film; or diffuse reflection by ultrafine particles which built the hydrophilic low reflection film.

The particle size of the ultrafine particles according to the present invention can be controlled by conditions for producing the particles, and therefore it may be controlled to be shorter than wavelengths of an intended light in a case of the low reflection film for which diffuse reflection is utilized, as discussed above. In a case of the antiglare film which provides the low reflection effect by utilizing diffuse reflection, the ultrafine particles or secondary particles built from aggregated ultrafine particles preferably has a particle size of longer than wavelengths of an intended light. In this case the particle size is not particularly limited unless difficulties are associated with film formation; however, it depends on its application. For example, in display devices such as liquid crystal displays, the particle size must be smaller than each pixel thereof.

Though conventional low reflection films using magnesium fluoride have had disadvantages: of its surface being subject to obvious soils and having difficulty in removing the soils therefrom; and of the film being inferior in adhesiveness to the substrate so as to be apt to peel (which disadvantage resulting from chemical stability of fluorides), it is possible, in the present invention, to obtain ultrafine particles having low refractive index and superior in hydrophilicity and durability, and to obtain a hydrophilic low reflection film having excellent properties by providing the ultrafine particles to the substrate. With possession of hydrophilicity, the film becomes superior in antifouling property and additionally soils adhered thereto can be readily washed away.

### EXAMPLES

Hereinafter, a description will be made with reference to the following Examples.

In the measurement, the following measuring instruments were used.
XRD; an instrument available from Rigaku Corporation under the trade name of RINT-Ultima III
Contact angle of pure water; a contact angle meter available from Kyowa Interface Science Co., Ltd under the trade name of CA-X
Measurement of particle diameter of ultrafine particles; a particle size distribution analyzer available from NIKKISO CO., LTD. under the trade name of Microtrac UPA

### [EXAMPLE 1] Preparation of Organosol (Mg compound single base)

Hereinafter, an example of preparation of an organosol based singly on Mg compound will be discussed with reference to "EXAMPLE 1-1" to "EXAMPLE 1-7". A prepared organosol was dried at 120 ° C and then subjected to diffraction with the use of a XRD instrument (available from Rigaku Corporation under the trade name of RINT-Ultima III) at a voltage of 40 kV, a current of 40 mA and a scanning angle of from 10 to 70°. As a result of this, there were observed a wide variety of peaks indicating an intensity of from about 50 to 160 cps and a halfwidth of from ±0.7 to ±1.2°. This implies that the substance is extremely low in crystallinity and that the substance is nearly noncrystalline rather than crystalline. Furthermore, an X-ray diffraction pattern obtained by this example matches with that of magnesium fluoride hydroxide (MgF_{1.89}(OH)_{0.11}) of JCPDS file 54-1272. An X-ray diffraction pattern of the organosol obtained in Example 1-1 is shown in Fig. 1, as a representative example.

### [EXAMPLE 1-1] MgCl₂·6H₂O/IPA base

16.46 g (0.173 mol) of reagent-grade magnesium chloride hexahydrate was dispersed in 150 ml of isopropyl alcohol (which may be referred to as IPA hereinafter) under a stirring condition at room temperature, thereby producing a suspension liquid in which magnesium chloride is dispersed. Then, 14.71 g (0.346 mol) of 47% hydrofluoric acid solution was added dropwise to the suspension liquid interruptedly over 10 minutes under the stirring condition at room temperature (HF/Mg=2.0). Subsequent to the dropwise addition of hydrogen fluoride, the suspension liquid was stirred continuously for 8 hours, thereby obtaining a cream-like transparent slurry. Ultrafine particles that existed in this solution had an average particle diameter of 20 nm. The thus produced sol was dried at 120 ° C to obtain an X-ray diffraction pattern as shown in Fig. 1.

### [EXAMPLE 1-2] MgCO₃/EGME base

17.331 g (0.188 mol) of reagent-grade magnesium carbonate was dispersed in 200 ml of ethylene glycol monoethyl ether under a stirring condition at room temperature, thereby producing a suspension liquid in which magnesium chloride is dispersed. Then, 16.35 g (0.417 mol) of 51% hydrofluoric acid solution was added dropwise to the suspension liquid interruptedly over 10 minutes under the stirring condition at room temperature (HF/Mg=2.22). Subsequent to the dropwise addition of the hydrofluoric acid solution, the suspension liquid was stirred continuously for 8 hours, thereby obtaining a cream-like transparent slurry. Ultrafine particles that existed in this solution had an average particle diameter of 15 nm.

### [EXAMPLE 1-3] Mg(OAc)₂ · 4H₂O/isopropyl alcohol base

21.43 g (0.1 mol) of reagent-grade magnesium acetate tetrahydrate was added to 100 ml of isopropyl alcohol and dissolved therein under a stirring condition at room temperature, thereby producing a magnesium acetate solution. Then, 7.20 g (0.204 mol) of 51wt% hydrofluoric acid solution was added dropwise to the magnesium acetate solution interruptedly over 60 minutes under the stirring condition at room temperature (HF/Mg=2.04). After a 6-hour stirring, a transparent solution was obtained. Ultrafine particles that existed in this solution had an average particle diameter of 35 nm.

### [EXAMPLE 1-4] MgCl₂/methanol base

10.23 g (0.108 mol) of reagent-grade magnesium chloride was added to 150 ml (116.2 g) of methanol and dissolved therein under a stirring condition for 2 hours at room temperature, thereby producing a magnesium chloride solution. Thereafter, a hydrogen fluoride solution prepared by diluting 9.815 g (0.25 mol) of 51wt% hydrofluoric acid solution with 50 ml of methanol was put in a dropping funnel and then added dropwise to the magnesium chloride solution interruptedly, under the stirring condition at room temperature (HF/Mg=2.33). After a 30-minute stirring, a transparent solution was obtained. Ultrafine particles that existed in this solution had an average particle diameter of 20 nm.

### [EXAMPLE 1-5] MgCO₃/isopropyl ether base

20.29 g (0.22 mol) of reagent-grade magnesium carbonate was added to 150 ml of isopropyl ether (which may be referred to as IPE hereinafter) and suspended therein under a stirring condition at room temperature, thereby producing a magnesium carbonate suspension slurry. Thereafter, 20.62 g (0.526 mol) of 51wt% hydrofluoric acid solution was added dropwise to the magnesium carbonate suspension slurry (dispersion liquid) interruptedly over 30 minutes under the stirring condition at room temperature (HF/Mg=2.39). After a 24-hour stirring, an ivory white dispersion liquid was obtained. Ultrafine particles that existed in this dispersion liquid had an average particle diameter of 25 nm.

### [EXAMPLE 1-6] Mg(OAc)2 · 4H₂O/ethanol base

21.43 g (0.1 mol) of reagent-grade magnesium acetate tetrahydrate was added to 100 ml of ethanol and dissolved therein under a stirring condition at room temperature, thereby producing a magnesium acetate solution. Thereafter, 7.20 g (0.204 mol) of 51wt% hydrofluoric acid solution was added dropwise to the magnesium acetate solution interruptedly over 60 minutes under the stirring condition at room temperature (HF/Mg=2.04). After a 6-hour stirring, a transparent solution was obtained. Ultrafine particles that existed in this solution had an average particle diameter of 35 nm.

### [EXAMPLE 1-7] Mg(OAc)₂ · 4H₂O/methyl ethyl ketone base

21.43 g (0.1 mol) of reagent-grade magnesium acetate tetrahydrate was added to 100 ml of methyl ethyl ketone and dissolved therein under a stirring condition at room temperature, thereby producing a magnesium acetate solution. Thereafter, 7.20 g (0.204 mol) of 51wt% hydrofluoric acid solution was added dropwise to the magnesium acetate solution interruptedly over 60 minutes under the stirring condition at room temperature (HF/Mg=2.04). After a 6-hour stirring, a transparent solution was obtained. Ultrafine particles that existed in this solution had an average particle diameter of 40 nm.

### [REFERENCE EXAMPLE 1] XRD of reagent-grade MgF₂

XRD of reagent-grade MgF₂ available from Wako Pure Chemical Industries, Ltd. was measured. An XRD pattern obtained thereby is shown in Fig. 2. The main peak observed at an angle of 27.3° indicates an intensity of 1485 cps and a halfwidth of ±0.11°. Additionally, there are observed sharp peaks having high intensity and extremely narrow halfwidth, which implies a good crystallinity.

### [EXAMPLE 2] Preparation of organosol (metal complex (Mg compound / Ca compound) base)

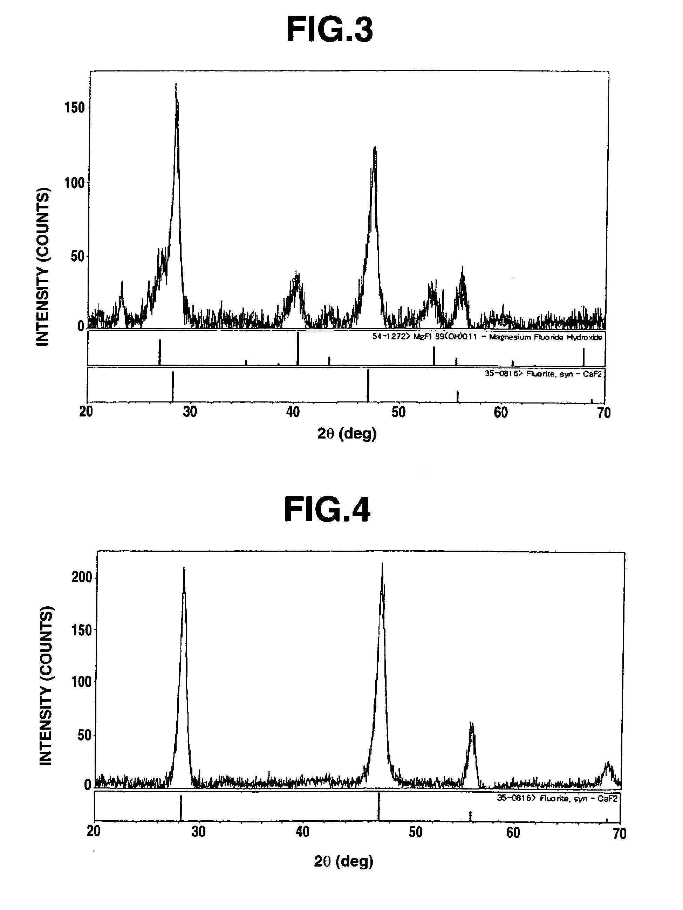

Hereinafter, an example of preparation of Mg/Ca metal complex-based organosol will be discussed with reference to "EXAMPLE 2-1" to "EXAMPLE 2-3". An obtained organosol was dried at 120 ° C and then subjected to diffraction with the use of a XRD instrument (available from Rigaku Corporation under the trade name of RINT-Ultima III) at a scanning angle of from 10 to 70°. As a result of this, peaks derived from magnesium fluoride and those from calcium fluoride were observed. As a representative example, an XRD pattern obtained by Example 2-2 is shown in Fig. 3. Each peak derived from calcium fluoride (CaF₂) has relatively high intensity in spite of a mole ratio of 1:1, while each peak derived from magnesium fluoride is reduced in intensity to about 1/4 of that as shown in the Mg compound-singly based organosol (Fig. 1). This implies that Ca compound or fluoride thereof acts as an inhibitor for crystallization of Mg compound.

### [EXAMPLE 2-1] MgCl₂ · 6H₂O/anhydrous CaCl₂/IPA base (3:1)

15.2 g (0.075 mol) of reagent-grade magnesium chloride hexahydrate was added to 100 ml of isopropanol and dispersed therein under a stirring condition at room temperature, followed by adding 2.8 g (0.025 mol) of anhydrous calcium chloride thereto, thereby producing a suspension liquid. This suspension liquid caused precipitation of white solid content as soon as released from stirring. Upon putting it back to suspension liquid by another stirring, 8.8 g (0.2244 mol) of 51mass% hydrofluoric acid solution was added to the suspension liquid interruptedly over 10 minutes. At the time of the addition, heat generation was hardly observed. Then stirring was kept on for 8 hours thereby obtaining a whitish suspension liquid in the form of gel. This suspension liquid was heated externally and stayed in a reflux condition for 8 hours, followed by being subjected to a treatment using a homogenizer (available from IKA Japan under the trade name of ULTRA-TURRAX T-25) for 1 hour, thereby producing a whitish solution high in viscosity. Ultrafine particles that existed in this solution had an average particle diameter of 20 nm.

### [EXAMPLE 2-2] MgCl₂ · 6H₂O/anhydrous CaCl₂/IPA base (1:1)

10.3 g (0.050 mol) of reagent-grade magnesium chloride hexahydrate was added to 100 ml of isopropanol and dispersed therein under a stirring condition at room temperature, followed by adding 5.5 g (0.050 mol) of anhydrous calcium chloride thereto, thereby producing a suspension liquid. This suspension liquid caused precipitation of white solid content as soon as released from stirring. Upon putting it back to suspension liquid by another stirring, 8.8 g (0.2244 mol) of 51mass% hydrofluoric acid solution was added to the suspension liquid interruptedly over 10 minutes. At the time of the addition, somewhat heat generation was observed. Then stirring was kept on for 30 minutes thereby obtaining a whitish suspension liquid in the form of gel. This suspension liquid was heated externally and stayed in a reflux condition for 8 hours, followed by being subjected to a treatment using a homogenizer (available from IKA Japan under the trade name of ULTRA-TURRAX T-25) for 1 hour, thereby producing a whitish solution high in viscosity. Ultrafine particles that existed in this solution had an average particle diameter of about 40 nm. The thus produced whitish solution was dried at 120 ° C to be a powder. An XRD pattern of this powder is shown in Fig. 3, in which peaks derived from magnesium fluoride and from calcium fluoride.

### [EXAMPLE 2-3] MgCl₂ · 6H₂O/anhydrous CaCl₂/IPAbase (1:3)

8.3 g (0.025 mol) of reagent-grade magnesium chloride hexahydrate was added to 100 ml of isopropanol and dispersed therein under a stirring condition at room temperature, followed by adding 5.5 g (0.075 mol) of anhydrous calcium chloride thereto, thereby producing a suspension liquid. This suspension liquid caused precipitation of large and white solid content as soon as released from stirring. Upon putting it back to suspension liquid by another stirring, 8.8 g (0.44 mol) of 51mass% hydrofluoric acid solution was added to the suspension liquid interruptedly over 10 minutes. At the time of the addition, significant heat generation was observed. Then stirring was kept on for 30 minutes thereby obtaining a whitish liquid which is high in viscosity so as to be in the form of gel. This liquid was heated externally and stayed in a reflux condition for 8 hours, followed by being subjected to a treatment using a homogenizer (available from IKA Japan under the trade name of ULTRA-TURRAX T-25) for 1 hour, thereby producing a whitish solution high in viscosity. Ultrafine particles that existed in this solution had an average particle diameter of about 100 nm.

### [REFERENCE EXAMPLE 2] XRD of CaF₂

10.1 g (0.091 mol) of reagent-grade anhydrous calcium chloride was added to 100 ml of ethanol and dispersed therein under a stirring condition at room temperature, followed by adding 8.05 g (0.20 mol) of 51mass% hydrofluoric acid solution thereto interruptedly over 10 minutes, thereby producing an organosol. The thus obtained organosol was dried at 120 ° C to be a powder. An XRD pattern of this powder is shown in Fig. 4.

### [EXAMPLE 3] Preparation of organosol (metal complex (Mg compound/Al compound) base)

Hereinafter, an example of preparation of Mg/Ca metal complex-based organosol will be discussed with reference to "EXAMPLE 3-1" to "EXAMPLE 3-4". An obtained organosol was dried at 120 ° C, followed by being subjected to diffraction with the use of a XRD instrument (available from Rigaku Corporation under the trade name of RINT-Ultima III) at a scanning angle of from 10 to 70°. As a result of this, peaks derived from magnesium fluoride and those from aluminum fluoride were observed. As a representative example, an XRD pattern obtained by Example 3-2 is shown in Fig. 5. Each peak derived from aluminum fluoride has relatively high intensity in spite of a Mg/Al mole ratio of 3/1, while each peak derived from magnesium fluoride is reduced in intensity to about 1/2 of that as shown in the Mg compound-singly based organosol (Fig. 1). This implies that Al compound or fluoride thereof acts as an inhibitor for crystallization of Mg compound.

### [EXAMPLE 3-1] MgCl₂ · 6H₂O/anhydrous AlCl₃/MEK base (5:1)

20.3 g (0.100 mol) of reagent-grade magnesium chloride hexahydrate was added to 100 ml of methyl ethyl ketone and dispersed therein under a stirring condition at room temperature, followed by adding 2.7 g (0.020 mol) of anhydrous aluminum chloride thereto, thereby producing a white slurry. At this time, gas generation and heat generation were observed. This suspension liquid caused precipitation of white solid content as soon as released from stirring. Upon putting it back to a homogenized suspension liquid by another stirring, 10.6 g (0.53 mol) of 51mass% hydrofluoric acid solution was added to the slurry interruptedly. At the time of the addition, the generation of hydrogen chloride gas and the significant heat generation were observed. After the addition of the hydrofluoric acid solution, stirring was kept on for 30 minutes thereby obtaining a light yellow slurry. This liquid was heated externally and stayed in a reflux condition for 8 hours, followed by being subjected to a treatment using a homogenizer (available from IKA Japan under the trade name of ULTRA-TURRAX T-25) for 1 hour, thereby producing a whitish solution high in viscosity. Ultrafine particles that existed in this solution had an average particle diameter of about 100 nm.

### [EXAMPLE 3-2] MgCl₂ · 6H₂O/anhydrous AlCl₃/MEK base (3:1)

20.5 g (0.101 mol) of reagent-grade magnesium chloride hexahydrate was added to 100 ml of methyl ethyl ketone and dispersed therein under a stirring condition at room temperature, followed by adding 4.7 g (0.033 mol) of anhydrous aluminum chloride thereto, thereby producing a suspension liquid. At this time, gas generation and heat generation were observed. This suspension liquid caused precipitation of white solid content as soon as released from stirring. Upon putting it back to a homogenized suspension liquid by another stirring, 12.1 g (0.61 mol) of 51mass% hydrofluoric acid solution was interruptedly added thereto. At the time of the addition, the generation of hydrogen chloride gas and the significant heat generation were observed. After the addition of the hydrofluoric acid solution, stirring was kept on for 30 minutes thereby obtaining a yellow slurry. This liquid was heated externally and stayed in a reflux condition for 8 hours, followed by being subjected to a treatment using a homogenizer (available from IKA Japan under the trade name of ULTRA-TURRAX T-25) for 1 hour, thereby producing a whitish solution high in viscosity. Ultrafine particles that existed in this solution had an average particle diameter of about 100 nm. The thus obtained solution was dried at 120 ° C to be a powder. An XRD pattern of this powder is shown in Fig. 5.

### [EXAMPLE 3-3] Mg(OAc)₂ · 4H₂O/anhydrous AlCl₃/MEK base (5:1)

21.5 g (0.100 mol) of reagent-grade magnesium acetate tetrahydrate was added to 100 ml of methyl ethyl ketone and dispersed therein under a stirring condition at room temperature, followed by adding 2.6 g (0.019 mol) of anhydrous aluminum chloride thereto, thereby producing a suspension liquid. At this time, gas generation and heat generation were observed. This suspension caused precipitation of white solid content as soon as released from stirring. Upon putting it back to a homogenized suspension liquid by another stirring, 10.5 g (0.53 mol) of 51mass% hydrofluoric acid solution was interruptedly added thereto. At the time of the addition, the generation of hydrogen chloride gas and the significant heat generation were observed. After the addition of the hydrofluoric acid solution, stirring was kept on for 30 minutes thereby obtaining a somewhat transparent white slurry. This liquid was heated externally and stayed in a reflux condition for 8 hours, followed by being subjected to a treatment using a homogenizer (available from IKA Japan under the trade name of ULTRA-TURRAX T-25) for 1 hour, thereby producing a whitish solution high in viscosity. Ultrafine particles that existed in this solution had an average particle diameter of about 100 nm.

### [EXAMPLE 3-4] Mg(OAc)₂ · 4H₂O/anhydrous AlCl₃/MEK base (3:1)

21.5 g (0.100 mol) of reagent-grade magnesium acetate tetrahydrate was added to 100 ml of methyl ethyl ketone and dispersed therein under a stirring condition at room temperature, followed by adding 4.5 g (0.033 mol) of anhydrous aluminum chloride thereto, thereby producing a suspension liquid. At this time, gas generation and heat generation were observed. This suspension liquid caused precipitation of white solid content as soon as released from stirring. Upon putting it back to a homogenized suspension liquid by another stirring, 12.0 g (0.60 mol) of 51mass% hydrofluoric acid solution was interruptedly added thereto. At the time of the addition, the generation of hydrogen chloride gas and the significant heat generation were observed. After the addition of hydrogen fluoride, stirring was kept on for 30 minutes thereby obtaining a somewhat transparent white slurry. This liquid was heated externally and stayed in a reflux condition for 8 hours, followed by being subjected to a treatment using a homogenizer (available from IKA Japan under the trade name of ULTRA-TURRAX T-25) for 1 hour, thereby producing a whitish solution high in viscosity. Ultrafine particles that existed in this solution had an average particle diameter of about 100 nm.

### [EXAMPLE 4] Preparation of organosol (complex base (Mg compound/metal oxide))

Hereinafter, an example of preparation of Mg/Ca metal complex-based organosol based on a complex material of Mg compound and metal oxide will be discussed with reference to "EXAMPLE 4-1" to "EXAMPLE 4-4". An obtained organosol was dried at 120 ° C, followed by being subjected to diffraction with the use of a XRD instrument (available from Rigaku Corporation under the trade name of RINT-Ultima III) at a scanning angle of from 10 to 70°. As a result of this, considerably weak peaks derived from magnesium fluoride were observed. As a representative example, an XRD pattern obtained by Example 4-1 is shown in Fig. 6. It is considered that colloidal silica acts as a crystallization inhibitor so that both became noncrystalline.

### [EXAMPLE 4-1] Mg(OAc)₂ · 4H₂O/IPA-ST/IPA base

21.5 g (0.10 mol) of reagent-grade magnesium acetate tetrahydrate was added to 150 ml of isopropanol and dispersed therein under a stirring condition at room temperature, followed by adding 60 g of 10mass% solution of organo silica sol IPA-ST (SiO₂ 30mass% isopropanol solution available from NISSAN CHEMICAL INDUSTRIES, LTD., an average particle diameter of which is from 10 to 20 nm) diluted with isopropanol, thereby preparing a suspension liquid. This suspension liquid caused precipitation of white solid content as soon as released from stirring. Upon putting it back to suspension liquid by another stirring, 8.9 g (0.23 mol) of 51mass% hydrofluoric acid solution was added thereto interruptedly over 10 minutes. At the time of the addition, heat generation was hardly observed. Thereafter stirring was kept on for 30 minutes thereby obtaining a transparent colorless liquid. This liquid was heated externally and stayed in a reflux condition for 8 hours. Ultrafine particles that existed in this liquid had an average particle diameter of about 30 nm. The thus obtained whitish solution was dried at 120 ° C to be a powder. An XRD pattern of this powder is shown in Fig. 6.

### [EXAMPLE 4-2] MgCl₂ · 6H₂O/methanol silica sol/IPA base

20.2 g (0.10 mol) of reagent-grade magnesium chloride hexahydrate was added to 150 ml of isopropanol and dispersed therein under a stirring condition at room temperature, followed by adding 60 g of 10mass% solution of methanol silica sol (SiO₂ 30mass% methanol solution available from NISSAN CHEMICAL INDUSTRIES, LTD., an average particle diameter of which is from 10 to 20 nm) diluted with isopropanol, thereby preparing a suspension liquid. This suspension liquid caused precipitation of white solid content as soon as released from stirring. Upon putting it back to suspension liquid by another stirring, 8.8 g (0.22 mol) of 51mass% hydrofluoric acid solution was interruptedly added thereto. At the time of the addition, heat generation was hardly observed. Thereafter stirring was kept on for 30 minutes thereby obtaining a transparent colorless liquid. This liquid was heated externally and stayed in a reflux condition for 8 hours. Ultrafine particles that existed in this liquid had an average particle diameter of about 40 nm.

### [EXAMPLE 4-3] Mg(acac)₂ · 2H₂O/methanol silica sol/IPA base

25.8 g (0.10 mol) of acetylacetone magnesium complex dihydrate (Mg(acac)₂ · 2H₂O) was added to 150 ml of isopropanol and dispersed therein under a stirring condition at room temperature, followed by adding 60 g of 10mass% solution of methanol silica sol (SiO₂ 30mass% methanol solution available from NISSAN CHEMICAL INDUSTRIES, LTD., an average particle diameter of which is from 10 to 20 nm) diluted with isopropanol, thereby preparing a suspension liquid. This suspension liquid caused precipitation of white solid content as soon as released from stirring. Upon putting it back to suspension liquid by another stirring, 8.7 g (0.22 mol) of 51mass% hydrofluoric acid solution was interruptedly added thereto. At the time of the addition, heat generation was hardly observed. Thereafter stirring was kept on for 30 minutes thereby obtaining a transparent colorless liquid. This liquid was heated externally and stayed in a reflux condition for 8 hours. Ultrafine particles that existed in this liquid had an average particle diameter of about 40 nm.

### [EXAMPLE 4-4] MgCl₂ · 6H₂O/ OSCAL 1432/IPA base

20.3 g (0.10 mol) of reagent-grade magnesium chloride hexahydrate was added to 150 ml of isopropanol and dispersed therein under a stirring condition at room temperature, followed by adding 60 g of 10mass% solution of OSCAL 1432 (colloidal silica dispersed in isopropyl alcohol available from JGC CATALYSTS AND CHEMICALS LTD., solid content of which is 30 mass %) diluted with isopropanol, thereby preparing a suspension liquid. This suspension liquid caused precipitation of white solid content as soon as released from stirring. Upon putting it back to suspension liquid by another stirring, 8.8 g (0.22 mol) of 51mass% hydrofluoric acid solution was interruptedly added thereto. At the time of the addition, heat generation was hardly observed. Thereafter stirring was kept on for 30 minutes thereby obtaining a transparent colorless liquid. This liquid was heated externally and stayed in a reflux condition for 8 hours. Ultrafine particles that existed in this liquid had an average particle diameter of about 50 nm.

### [EXAMPLE 5] Preparation of organosol: mixture base (Mg compound/filler) (mica)

### Preparation of magnesium fluoride hydroxide organosol (Mg(OEt)₂/IPA base)

56.37 g (0.49 mol) of reagent-grade magnesium ethoxide was added to 600 ml of isopropyl alcohol (which may be referred to as IPA hereinafter) and dissolved therein under a stirring condition at room temperature, thereby producing a magnesium ethoxide solution. Thereafter, 41.52 g (1.06 mol) of 51wt% hydrofluoric acid solution was added dropwise to the magnesium ethoxide solution interruptedly over 60 minutes, under the stirring condition at room temperature (HF/Mg=2.15). After a 6-hour stirring, a transparent solution was obtained. Ultrafine particles that existed in this solution had an average particle diameter of 35 nm.

The solution was diluted with IPA thereby producing an about 4wt% IPA solution. Five kinds of mica (available from YAMAGUCHI MICA CO., LTD. under the trade names of mica SJ-005, mica A11, mica SYA-21R, mica AB-25S and mica SYA-41R) were prepared as fillers and then a magnesium fluoride hydroxide/IPA solution was added to each mica and stirred well, thereby preparing five kinds of organosol respectively named "coating liquid 8" to "coating liquid 12".

### [EXAMPLE 6] Preparation of organosol: mixture base (Mg compound/filler) (montmorillonite)

### Preparation of magnesium fluoride hydroxide organosol (Mg(OAc)₂/IPA base)

21.43 g (0.1 mol) of reagent-grade magnesium acetate was added to 100 ml of isopropyl alcohol and dissolved therein under a stirring condition at room temperature, thereby producing a magnesium acetate solution. Thereafter, 7.20 g (0.204 mol) of 51wt% hydrofluoric acid solution was added dropwise to the magnesium acetate solution interruptedly over 60 minutes, under the stirring condition at room temperature (HF/Mg=2.04). After a 6-hour stirring, a transparent solution containing magnesium fluoride hydroxide was obtained.

Then, 4 g of montmorillonite (having a particle diameter of 8 µm) was added to 100 ml of the above-mentioned solution and sufficiently dispersed therein thereby preparing an organosol.

### [EXAMPLE 7] Preparation of organosol: complex base (Mg compound/other metal compound/filler (phlogopite))

### Preparation of magnesium fluoride hydroxide organosol (Mg(OA_{C})₂/IPA base)

20.33 g (0.1 mol) of reagent-grade magnesium chloride hexahydrate and 15.81 g (0.1 mol) of calcium acetate were added to 200 ml of propylene glycol monomethyl ether and dissolved therein under a stirring condition at room temperature, thereby producing a magnesium/calcium mixture solution. Thereafter, 14.4 g (0.410 mol) of 51wt% hydrofluoric acid solution was added dropwise to the solution interruptedly over 3 hours, under the stirring condition at room temperature (HF/(Mg+Ca)=2.05). After a 4-hour stirring, a transparent ivory white solution containing fluoride hydroxide of magnesium/calcium was obtained. Then, 4 g of fluorine phlogopite (having a particle diameter of 8 µm) was added to 200 ml of this solution and mixed well, thereby preparing an organosol.

### [EXAMPLE 8] Preparation of organosol: complex base (Mg compound/other metal compound/filler (kaolin clay))

### Preparation of magnesium fluoride hydroxide organosol (Mg(OAc)₂/IPA base)

25.64 g (0.1 mol) of reagent-grade magnesium nitrate hexahydrate and 15.81 g (0.1 mol) of calcium acetate were added to 200 ml of IPA and dissolved therein under a stirring condition at room temperature, thereby producing a magnesium/calcium mixture solution. Thereafter, 14.47 g (0.410 mol) of 51wt% hydrofluoric acid solution was added dropwise to the solution interruptedly over 3 hours, under the stirring condition at room temperature (HF/(Mg+Ca)=2.05). After a 4-hour stirring, a transparent ivory white solution containing fluoride hydroxide of magnesium/calcium was obtained. Then, 10 g of kaolin clay (2.5 µm) was added to 200 ml of this solution and mixed well, thereby preparing an organosol.

### [EXAMPLE 9] Coating and Film evaluation (Mg single base)

### [EXAMPLE 9-1]

The magnesium fluoride hydroxide-containing ethanol sol prepared in [EXAMPLE 1-6] was applied to a copper plate to form a coating film, and hydrophilicity thereof was evaluated.

A 50mm×50mm metal (a copper plate) of 0.1mm thickness was immersed in the magnesium fluoride hydroxide solution and then raised at a raising rate of 2mm/sec. The raised copper plate was coated on its surface with ultrafine particles and dried at 50 ° C for 1 hour. A measurement was conducted thereon, with which it was found that the plate had a contact angle of pure water of 4.8° so as to exhibit superhydrophilicity.

This coating film was rinsed with running pure water at 50 ° C for 1 hour and then the contact angle was measured once again. With this, it was confirmed that: droplets spread over the surface of the coating film; the contact angle thereof (close to 0°) was not so wide as to be measured; and hence the coating film was a superhydrophilic film. Furthermore, this coating film was immersed in 1 L of running water over two cycles of night and day and then the contact angle of pure water was measured once again. With this, it was similarly confirmed that: droplets spread over the surface of the coating film; the contact angle thereof (close to 0°) was not so wide as to be measured; and hence the coating film was a superhydrophilic film. This provides the fact that the hydrophilic film was a superhydrophilic film having durability.

A untreated copper plate as a comparative example exhibited water repellency of 89° under the same conditions. The plate generally had a contact angle ranging from 85° to 9 ° so as to maintain its superhydrophilicity both when rinsed with running water and when immersed in running water over two cycles of night and day.

### [EXAMPLE 9-2]

The magnesium fluoride hydroxide-containing methyl ethyl ketone sol prepared in [EXAMPLE 1-7] was applied to a metal (a titanium plate), and hydrophilicity thereof was evaluated. A 50mm×50mm metal (a titanium plate) of 0.1mm thickness was immersed in the magnesium fluoride hydroxide solution and then raised at a raising rate of 2mm/sec. The raised titanium plate was coated on its surface with ultrafine particles and dried at 50 ° C for 1 hour. A measurement of the contact angle of pure water was conducted thereon, with which it was confirmed that: droplets spread over the surface of the coating film; the contact angle thereof (close to 0°) was not so wide as to be measured; and hence the coating film was a superhydrophilic film.

This coating film was rinsed with running pure water at 50 ° C for 1 hour and then the contact angle was measured once again. With this, it was similarly confirmed that: droplets spread over the surface of the coating film; and the contact angle thereof (close to 0°) was not so wide as to be measured. Furthermore, this coating film was immersed in 1 L of running water over two cycles of night and day and then the contact angle of pure water was measured once again. As a result, droplets spread over the surface of the coating film, and additionally the contact angle thereof (close to 0°) was not so wide as to be measured. It is known from this that the hydrophilic film was a superhydrophilic film having durability.

### [EXAMPLE 10] Coating with Metal complex material (Mg/Ca base) and Film evaluation

As set forth below, the complex material of Mg compound and Ca compound, prepared in [EXAMPLE 2] was applied to a glass plate and a copper plate thereby being evaluated in hydrophilicity.

### [EXAMPLE 10-1] (Mg/Ca base) Substrate: glass plate

The liquids obtained in [EXAMPLE 2-1] to [EXAMPLE 2-3] were prepared with isopropanol to have a ultrafine particle concentration of 1 mass %, and respectively named "coating liquid 1", "coating liquid 2" and "coating liquid 3". A 10×10cm glass plate was immersed in each liquid. Immediately after this, the plate was raised at a raising rate of 2mm/sec and coated on both surfaces with ultrafine particles, followed by drying at 120 ° C for 1 hour. An outward appearance of the coating film was observed, and thereafter, the contact angle of water was measured by using a contact angle meter available from Kyowa Interface Science Co., Ltd under the trade name of CA-X. Furthermore, the glass plate was immersed in running water at room temperature for 1 hour and then dried at 120 ° C for 1 hour. Subsequently, the contact angle of water was measured once again. Results are shown in TABLE 1. The term "unreacted" as shown in TABLES 1 to 3 means a substrate having no coating film.

**[TABLE 1]**

| Substrate: Glass plate | Composition of Coating liquid | | Contact angle (° ) | |
|---|---|---|---|---|
| | Composition | Mole ratio | Dried at 120 ° C | Dried at 120 ° C after rinsing |
| Coating liquid 1 | MgCl₂ • 6aq/CaCl₂/IPA HF | Mg/Ca=3/1 | 11.5 | 4.6 |
| Coating liquid 2 | MgCl₂ • 6aq/CaCl₂/IPA HF | Mg/Ca=1/1 | 14.4 | 7.2 |
| Coating liquid 3 | MgCl₂ • 6aq/CaCl₂/IPA HF | Mg/Ca=1/3 | 13.1 | 0.0 |
| Unreacted | - | - | 33.0 | - |

### [EXAMPLE 10-2] (Mg/Ca base) Substrate: copper plate

The liquids obtained in [EXAMPLE 2-1] to [EXAMPLE 2-3] were prepared with isopropanol to have a ultrafine particle concentration of 1 mass %. A 5×5cm copper plate was immersed in each of the coating liquids 1, 2 and 3 obtained by Example 10. Immediately after this, the plate was raised at a raising rate of 2mm/sec and coated on its both surfaces with ultrafine particles, followed by drying at 120 ° C for 1 hour. An outward appearance of the coating film was observed, and thereafter the contact angle of water was measured by using a contact angle meter available from Kyowa Interface Science Co., Ltd under the trade name of CA-X. Furthermore, the copper plate was immersed in running water at room temperature for 1 hour and then dried at 120 ° C for 1 hour. Subsequently, the contact angle of water was measured once again. Results are shown in TABLE 2.

Thereafter, a specimen was immsersed, at room temperature for 5 days, in water on which ion-exchange was conducted. The specimen taken out thereof were dried at 120 ° C for 1 hour, and its contact angle of water was measured once again. Upon letting the specimen stand in air for 24 hours, the contact angle of water was further measured by the same method. However, every coating film prepared from the coating liquids 1, 2 and 3 had a contact angle of 0°.

**[TABLE 2]**

| Substrate: Copper plate | Composition of Coating liquid | | Contact angle (° ) | |
|---|---|---|---|---|
| | Composition | Mole ratio | Dried at 120 ° C | Dried at 120 ° C after rinsing |
| Coating liquid 1 | MgCl₂ • 6aq/CaCl₂/IPA HF | Mg/Ca=3/1 | 29.8 | 2.4 |
| Coating liquid 2 | MgCl₂ • 6aq/CaCl₂/IPA HF | Mg/Ca=1/1 | 0.0 | 0.0 |
| Coating liquid 3 | MgCl₂ • 6aq/CaCl₂/IPA HF | Mg/Ca=1/3 | 0.0 | 0.0 |
| Unreacted | - | - | 97.6 | - |

### [EXAMPLE 10-3]

A coating liquid proudced by preparing the liquid obtained in [EXAMPLE 2-2] with isopropanol to have a ultrafine particle concentration of 1 mass % (i.e. "the coating liquid 2" as discussed in the above Example) was used to form a coating film on a brass plate. Its hydrophilicity was evaluated.

A 50mm×50mm brass plate of 0.1mm thickness was wiped at its surface with acetone and then immersed in the magnesium/calcium fluoride hydroxide solution, followed by raising at a raising rate of 2mm/sec. Thereafter, ultrafine particles were applied to a surface of the brass plate. The coating film was rinsed with running pure water and then dried at 80 ° C for 1 hour. A measurement of the contact angle was made thereon, with which it was confirmed that: droplets spread over the surface of the coating film; the contact angle thereof was not so wide as to be measured; and hence the coating film was a superhydrophilic film. Furthermore, this coating film was immersed in 1 L of water over two cycles of night and day and then the contact angle of pure water was measured once again. With this, it was similarly confirmed that: droplets spread over the surface of the coating film; the contact angle thereof was not so wide as to be measured; and hence the coating film was a superhydrophilic film.

### [EXAMPLE 11] Coating with Metal complex material (Mg/Al base) and Film evaluation

### [EXAMPLE 11-1] (Mg/Al base) Substrate: glass plate

The liquids obtained in [EXAMPLE 3-1] to [EXAMPLE 3-4] were prepared with methyl ethyl ketone to have a ultrafine particle concentration of 1 mass %, and respectively named "coating liquid 4" to "coating liquid 7". Each of the liquids was applied to a glass plate by using Barcoater Nos. 3, 7 and 10 and then dried at 100 ° C for 1 hour. An outward appearance of the coating film was observed, and thereafter the contact angle of water was measured by using a contact angle meter available from Kyowa Interface Science Co., Ltd under the trade name of CA-X. Furthermore, the glass plate was immersed in running water at room temperature for 1 hour and then dried at 120 ° C for 1 hour, followed by a further measurement of the contact angle of water. Results are shown in TABLE 3.

**[TABLE 3]**

| Substrate: Glass plate | Specimen | Composition of Coating liquid | | Barcoater No. | Contact angle (° ) | |
|---|---|---|---|---|---|---|
| | | Composition | Mole ratio | | Dried at 120 ° C | Dried at 80 ° C after rinsing |
| Coating liquid 4 | 4-A | MgCl₂ • 6aq/AlCl₃/MEK HF | Mg/Al=5/1 | 3 | 28.7 | 23.4 |
| | 4-B | | | 7 | 28.2 | 18.4 |
| | 4-C | | | 10 | 34.6 | 28.7 |
| Coating liquid 5 | 5-A | MgCl₂ • 6aq/AlCl₃/MEK HF | Mg/Al=3/1 | 3 | 24.3 | 21.5 |
| | 5-B | | | 7 | 27.6 | 28.4 |
| | 5-C | | | 10 | 24.9 | 20.4 |
| Coating liquid 6 | 6-A | Mg(CH₃COO)₂ • 4aq/AlCl₃/MEK HF | Mg/Al=5/1 | 3 | 25.4 | 20.1 |
| | 6-B | | | 7 | 23.6 | 14.9 |
| | 6-C | | | 10 | 23.1 | 14.3 |
| Coating liquid 7 | 7-A | Mg(CH₃COO)₂ • 4aq/AlCl₃/MEK HF | Mg/Al=3/1 | 3 | 17.8 | 12.6 |
| | 7-B | | | 7 | 13.2 | 0.0 |
| | 7-C | | | 10 | 15.4 | 2.0 |
| Unreacted | | - | - | - | 33.0 | - |

### [EXAMPLE 12] Mg/filler(mica)/IPA base

Each of the coating liquids prepared in EXAMPLE 5 as filler mixture-based complex organosols, i.e. the coating liquid 8 (mica based on SJ-005), the coating liquid 9 (mica based on All), the coating liquid 10 (mica based on SYA-21R), the coating liquid 11 (mica based on AB-25S) and the coating liquid 12 (mica based on SYA-41R), was used to form its coating film on a copper plate. Hydrophilicity evaluation was conducted thereon.

A 50mm×50mm brass plate of 0.1mm thickness was wiped at its surface with acetone. The organosol was charged into a syringe and applied to the brass plate in such a manner as to be dropped from the syringe. A thus formed coating film was rinsed with running pure water and then dried at 80° C for 1 hour. A measurement of the contact angle was made thereon, with which it was confirmed that: droplets spread over the surface of the coating film; the contact angle thereof (expressed by θ=0° for convenience) was not so wide as to be measured; and hence the coating film was superhydrophilic. Results are shown in TABLE 4.

**[TABLE 4]**

| | | First rinse | | Second rinse | |
|---|---|---|---|---|---|
| Substrate: Copper plate | 0.07g Mica particles + 4 ml base sol | Water contact angle (° ) after rinse and 80° C drying | | Water contact angle (° ) after immersion in water over two cycles of night and day and rinse | |
| | Kind of mica | θ₁ | Evaluation | θ₂ | Evaluation |
| Coating liquid 8 | Mica SJ-005 | 0 | 0 as soon as contacted | 0 | 0 as soon as contacted |
| Coating liquid 9 | Mica All | 0 | 0 as soon as contacted | 0 | 0 as soon as contacted |
| Coating liquid 10 | Mica SYA-21R | 0 | 0 as soon as contacted | 0 | 0 as soon as contacted |
| Coating liquid 11 | Mica AB-25S | 0 | 0 as soon as contacted | 0 | 0 as soon as contacted |
| Coating liquid 12 | Mica SYA-41R | 0 | 0 as soon as contacted | 0 | 0 as soon as contacted |

### [EXAMPLE 13] Mg/filler(montmorillonite)/IPA base

The magnesium fluoride hydroxide-containing organosol to which montmorillonite prepared in EXAMPLE 6 was added was used to form its coating film on an aluminum plate. Hydrophilicity evaluation was conducted thereon.

A 50mm×50mm aluminum plate of 0.1mm thickness was wiped at its surface with acetone and then immersed in the organosol. Thereafater, the plate was raised at a raising rate of 2mm/sec, followed by being coated on its surface with ultrafine particles.

A thus formed coating film was rinsed with running pure water and then dried at 80 ° C for 1 hour. A measurement of the contact angle was made thereon, with which it was confirmed that: droplets spread over the surface of the coating film; the contact angle thereof (θ=0°) was not so wide as to be measured; and hence the coating film was superhydrophilic. Furthermore, this coating film was immersed in 1 L of water over two cycles of night and day and then the contact angle of pure water was measured once again. With this, it was similarly confirmed that: droplets spread over the surface of the coating film; the contact angle thereof (θ=0°) was not so wide as to be measured; and hence the coating film was a superhydrophilic film having durability.

Similarly, an inner surface of an aluminum pipe of internal diameter 4mm, thickness 0.1mm and length 100mm was rinsed with ethanol and coated with ultrafine particles under the same conditions. However, appearance change was not observed even after immersion in 1L of water over two cycles of night and day.

### [EXAMPLE 14] Mg/Ca/filler(fluorine phlogopite)-base /PRGMME

The organosol prepared in [EXAMPLE 7] was used to form its coating film on a carbon plate. Hydrophilicity evaluation was conducted thereon.

A 50mm×50mm carbon plate of 2mm thickness (which carbon plate had been previously wiped with acetone) was immersed in the above-mentioned "a dispersion liquid obtained by adding fluorine phlogopite to the magnesium/calcium fluoride hydroxide solution" (organosol) for 10 minutes. Thereafater, the plate was raised at a raising rate of 2mm/sec, followed by being coated on its surface with ultrafine particles.

A thus formed coating film was dried at 300 ° C for 2 hours, rinsed with running pure water and further dried at 110 ° C for 2 hours. A measurement of the contact angle was made thereon, with which it was confirmed that: droplets spread over the surface of the coating film; the contact angle thereof (θ=0°) was not so wide as to be measured; and hence the coating film was superhydrophilic. Furthermore, this coating film was immersed in 1 L of water over two cycles of night and day and then the contact angle of pure water was measured once again. With this, it was similarly confirmed that: droplets spread over the surface of the coating film; the contact angle thereof (θ=0°) was not so wide as to be measured; and hence the coating film was superhydrophilic.

### [EXAMPLE 15] Complex (Mg/Ca/filler(kaolin clay)) base

The organosol prepared in [EXAMPLE 8] was used to form its coating film on a stainless steel plate (SUS). Hydrophilicity evaluation was conducted thereon.

A 50mm×50mm SUS plate of 2mm thickness (the surface of which had been previously wiped with acetone) was immersed in the above-mentioned "a dispersion liquid obtained by adding kaolin clay to the magnesium/calcium fluoride hydroxide solution" (organosol) for 1 minute. Thereafater, the plate was raised at a raising rate of 2mm/sec, followed by being coated on its surface with ultrafine particles.

A thus formed coating film was dried at 120 ° C for 1 hour, rinsed with running water and further dried at 80 ° C for 1 hour. A measurement of the contact angle was made thereon, with which it was confirmed that the coating film had a contact angle of pure water of 8.6° and therefore had superhydrophilicity. Furthermore, this coating film was immersed in 1 L of water over two cycles of night and day and then the contact angle of pure water was measured once again. With this, it was confirmed that the contact angle thereof was not so wide as to be measured and that the coating film was therefore superhydrophilic.

### [EXAMPLE 16] For hydrophilic low-reflection film use

The organosol prepared in [EXAMPLE 1-4] was used to form its coating film on a soda-lime glass substrate. Hydrophilicity evaluation was conducted thereon.

The solution was applied to the general soda-lime glass having a thickness of 2 mm by using barcoater No. 7 so as to form a film and then dried at 80 ° C for 1 hour, thereby producing a transparent colorless film.

A measured visible transmittance was 98.5 %, which means a great improvement as compared with 90.8 % of visible transmittance that the no-coating glass plate had.

A thus formed coating film was rinsed with running pure water and then dried at 80 ° C for 1 hour. A measurement of the contact angle was made thereon, with which it was confirmed that: droplets spread over the surface of the coating film; the contact angle thereof was not so wide as to be measured; and hence the coating film was superhydrophilic. Furthermore, this coating film was immersed in 1 L of water over two cycles of night and day and then the contact angle of pure water was measured once again. With this, it was similarly confirmed that: droplets spread over the surface of the coating film; the contact angle thereof was not so wide as to be measured; and hence the coating film was a superhydrophilic film having durability.

As a result of a measurement using an ellipsometer available from Mizojiri Optical Co., Ltd. under the trade name of DVA-FL3, the film had a thickness of 120 nm and a refractive index (n) was 1.355.

It is apparent from the above-mentioned Examples that the hydrophilic low-reflection film according to the present invention has excellent effects of both low reflection and hydrophilicity and makes it possible to provide a low reflection film of high performance and of soil resistance.

### INDUSTRIAL USABILITY

The hydrophilic substrate according to the present invention can take advantage of the good wettability of polar liquids such as water to the surface of the substrate. Therefore, the substrate, if its kind is suitably selected, can be used in the following applications: membrane filters used for water treatment; heat exchange elements such as heat pipes and fins; scrubbers; vaporization facilities; cooling towers, frost-free refrigerators; lenses for glasses such as goggles, helmets and contact lenses; nozzles for flushing; electrodes to be immersed in liquid; vessels to house liquids therein; antistatic materials; metallic bodies for vehicles or the like; hydroplaning prevention tires; substrates for an ice rink; mechanical members to be brought into contact with a lubricating surface; materials for preventing exteriorly exposed members (such as power transmission lines, antennas, roofs, and cables for ski lifts) from accretion of ice, snow, water and frost; antifouling members such as outdoor use sheets, outdoor use signboards, retroreflectors for road surfaces, and inner walls or soundproofing walls of road traffic tunnels; and dew condensation-preventing materials for vinyl houses. Moreover, ultrafine particles having an average particle diameter of not larger than 200 nm, preferably not larger than 50 nm, more preferably within a range of from 5 to 40 nm are able to improve visible transmittance of articles, so that these can be preferably used to articles which desire visible transmittance, such as: cover glasses provided with a dew condensation-preventing property, antifouling property and antifogging property and used for solar cells or display devices; window glasses and mirrors provided with antifogging property or antifouling property; showcases provided with a dew condensation-preventing property, antifouling property and antifogging property; optical filters; and lenses and goggles provided with a dew condensation-preventing property, antifouling property and antifogging property. In such cases, magnesium fluoride hydroxide ultrafine particles existing dispersedly at least at the surface of the coating layer bring about reduction in refractive index, so that low reflectivity is imparted to the article as an added value.

### EXPLANATION OF REFERENCE NUMERALS

- 1: Hydrophilic substrate
- 2: Ultrafine particles
- 3: Substrate
- 4: Coating layer
- 5: Binder
- 6: Binder
- 7: Filler

## Claims

1. An organosol comprising:
an organic solvent; and
a magnesium fluoride compound dispersed in the organic solvent, the magnesium fluoride compound being obtained by reacting at least a magnesium compound with a hydrofluoric acid-containing solution in the organic solvent,
**characterized in that** the magnesium fluoride compound contained in the organosol is ultrafine particles having an average particle diameter of from 5 to 500 nm.

2. An organosol as claimed in Claim 1, **characterized in that** the magnesium fluoride compound is at least magnesium fluoride hydroxide having a hydroxyl group.

3. An organosol as claimed in Claim 1 or 2, **characterized in that** the magnesium compound is used as a main raw material while one other metal compound is used as an auxiliary raw material.

4. An organosol as claimed in Claim 3, **characterized in that** the other metal compound includes at least one metal selected from the group consisting of calcium, barium, strontium, lithium, sodium, potassium, rubidium, cesium, aluminum, gallium, indium, silicon, germanium, tin, lead, antimony, bismuth, copper, silver, gold, zinc, scandium, yttrium, titanium, zirconium, hafnium, niobium, tantalum, chromium, molybdenum, tungsten, manganese, iron, cobalt, nickel, ruthenium, rhodium, palladium, osmium, iridium, and platinum.

5. An organosol as claimed in Claim 3 or 4, **characterized in that** the other metal compound includes at least one metal selected from the group consisting of calcium, barium, lithium, sodium, aluminum and iron.

6. An organosol as claimed in Claim 4 or 5, **characterized in that** the other metal compound is at least one selected from the group consisting of oxide, hydroxide, hydroxide sol, nitrate, chloride, acetate, carbonate, borate, oxalate, citrate, phosphates, octylate, organic metal complex and alkoxide, of the metal.

7. An organosol as claimed in Claim 3, **characterized in that** the other metal compound is ultrafine particles of an oxide of a metal.

8. An organosol as claimed in Claim 7, **characterized in that** the metal is at least one metal selected from the group consisting of silicon, aluminum, cerium, zirconium and titanium.

9. An organosol as claimed in any of Claims 1 to 8, **characterized by** further comprising a filler as an additive.

10. An organosol as claimed in Claim 9, **characterized in that** the filler is at least one selected from the group consisting of phyllosilicate mineral, calcined shell calcium, zeolite, silica gel, anthracite, activated carbon, fiber, a carbon compound, and a hydrophilic mucopolysaccharide.

11. An organosol as claimed in Claim 10, **characterized in that** the phyllosilicate mineral is at least one kind selected from the group consisting of prehnite, apophyllite, talc, pyrophyllite, mica, vermiculite, chlorite, montmorillonite, kaolinite, dickite, serpentine and sepiolite.

12. A method for manufacturing the organosol as claimed in any of Claims 1 to 11, comprising the following steps (a), (b) and (c):
(a) a step of adding a hydrofluoric acid-containing solution dropwise to a solution obtained by dispersing, suspending or dissolving at least a magnesium compound in an organic solvent, under a condition of reducing a reaction rate, thereby producing magnesium fluoride hydroxide ultrafine particles bit by bit;
(b) a step of eliminating a by-product or an excessive amount of hydrogen fluoride; and
(c) a step of conducting a solvent substitution or a solvent concentration adjustment on a magnesium fluoride hydroxide sol formed by the step (b) thereby producing the organosol.

13. A manufacturing method as claimed in Claim 12, **characterized in that** the other metal compound or the filler is added as the auxiliary raw material in the step (a).

14. A manufacturing method as claimed in Claim 12, **characterized by** adding a step (d) behind the step (c), the step (d) being of pulverizing an aggregate of the magnesium fluoride hydroxide.

15. A hydrophilic substrate comprising:
a substrate; and
a coating layer formed on the substrate,
**characterized in that** ultrafine particles are dispersed at least at a surface of the coating layer and that the ultrafine particles contains at least magnesium fluoride hydroxide.

16. A hydrophilic substrate as claimed in Claim 15, **characterized in that** the ultrafine particles have an average particle diameter of from 5 to 500 nm.

17. A hydrophilic substrate as claimed in Claim 15 or 16, **characterized in that** other ultrafine particles different from the ultrafine particles of the magnesium fluoride hydroxide are mixed to exist at least at the surface of the coating layer.

18. A hydrophilic substrate as claimed in Claim 17, **characterized in that** the other ultrafine particles have an average particle diameter of from 5 to 500 nm.

19. A hydrophilic substrate as claimed in Claim 15, **characterized in that** the ultrafine particles dispersed at least at the surface of the coating layer are ultrafine particles formed by treating the substrate with the organosol as claimed in any of Claims 1 to 11.

20. A hydrophilic substrate as claimed in any of Claims 15 to 19, **characterized in that** the coating layer contains a binder and that the binder bonds the ultrafine particles to the substrate.

21. A hydrophilic substrate as claimed in any of Claims 15 to 20, **characterized in that** the coating layer has at its surface a contact angle of water of not more than 20°.

22. A hydrophilic substrate as claimed in any of Claims 15 to 21, **characterized in that** a surface layer in which the ultrafine particles of the magnesium fluoride hydroxide are dispersed is occupied with 30 % by volume of the ultrafine particles.

23. A hydrophilic substrate as claimed in any of Claims 15 to 22, **characterized in that** the ultrafine particles exist all over the coating layer at a charging ratio of from 40 to 90 vol. % in total.

24. A hydrophilic substrate as claimed in any of Claims 15 to 23, **characterized in that** the substrate is one selected from the group consisting of porous substrates, inorganic glass substrates, plastic glass substrates, metal substrates and ceramic substrates.

25. A heat exchange element comprising:
a substrate; and
a hydrophilic film formed on the substrate,
**characterized in that** the hydrophilic film comprises ultrafine particles and that the ultrafine particles contain at least magnesium fluoride hydroxide thereby exhibiting hydrophilicity of the hydrophilic film.

26. A heat exchange element as claimed in Claim 25, **characterized in that** the ultrafine particles further contain calcium fluoride.

27. A heat exchange element as claimed in Claim 25 or 26, **characterized in that** the ultrafine particles have an average particle diameter of from 5 to 500 nm.

28. A heat exchange element as claimed in any of Claims 25 to 27, **characterized in that** the hydrophilic film further contain a phyllosilicate mineral.

29. A heat exchange element as claimed in any of Claims 25 to 28, **characterized in that** the hydrophilic film contains a binder and that the binder bonds the ultrafine particles to the substrate.

30. A heat exchange element as claimed in any of Claims 25 to 29, **characterized in that** the hydrophilic film has at its surface a contact angle of water of not more than 30°.

31. A heat exchange element as claimed in any of Claims 25 to 30, **characterized in that** the substrate is one selected from the group consisting of iron, copper, aluminum, brass, stainless steel, tin, brass, titanium, nickel, magnesium and the like and alloys of these, glass, glass fibers, quartz, pottery, silicon carbide, silicon nitride, mullite, carbon, carbon fibers, C/C composite, and carbon nanotube.

32. A hydrophilic low-reflection film for reducing a light reflection of a surface of a substrate, **characterized in that** the low-reflection film comprises ultrafine particles and that the ultrafine particles contain magnesium fluoride hydroxide thereby exhibiting hydrophilicity.

33. A hydrophilic low-reflection film as claimed in Claim 32, **characterized in that** the ultrafine particles further contain calcium fluoride.

34. A hydrophilic low-reflection film as claimed in Claim 32 or 33, **characterized in that** the ultrafine particles have an average particle diameter of from 5 to 500 nm.

35. A hydrophilic low-reflection film as claimed in any of Claims 32 to 34, **characterized in that** the hydrophilic low-reflection film contains a binder and that the binder bonds the ultrafine particles to the substrate.

36. A hydrophilic low-reflection film as claimed in any of Claims 32 to 35, **characterized in that** the hydrophilic low-reflection film has at its surface a contact angle of water of not more than 20°.

37. A hydrophilic low-reflection film as claimed in any of Claims 32 to 36, **characterized in that** a low reflection effect is derived from an optical thin film interference between the substrate and the hydrophilic low-reflection film or a multilayer including the hydrophilic low-reflection film.

38. A hydrophilic low-reflection film as claimed in any of Claims 32 to 37, **characterized in that** a low reflection effect is derived from diffuse reflection due to the ultrafine particles that built the hydrophilic low-reflection film.
